(19) Europäisches Patentamt / European Patent Office / Office européen des brevets

(11) EP 4 624 903 A1

(12) **EUROPEAN PATENT APPLICATION**

(43) Date of publication:
**01.10.2025 Bulletin 2025/40**

(21) Application number: **25160848.5**

(22) Date of filing: **28.02.2025**

(51) International Patent Classification (IPC):
***G01N 21/64*** *(2006.01)* ***G01N 21/53*** *(2006.01)*
***B05B 1/00*** *(2006.01)* ***B05B 12/00*** *(2018.01)*
***G01N 15/00*** *(2024.01)*

(52) Cooperative Patent Classification (CPC):
**G01N 21/53; B05B 1/00; B05B 12/00; G01N 15/00; G01N 21/645;** G01N 21/6456; G01N 2021/6419; G01N 2021/6441

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.03.2024 GB 202404228**

(71) Applicant: **Rolls-Royce plc**
**London N1 9FX (GB)**

(72) Inventors:
- **Harding, Stephen**
  **Derby, DE24 8BJ (GB)**
- **Brend, Mark**
  **Derby, DE24 8BJ (GB)**

(74) Representative: **Rolls-Royce plc**
**P.O. Box 31**
**IP Department (SinA-48)**
**Derby Derbyshire DE24 8BJ (GB)**

(54) **LIQUID SPRAY ANALYSIS**

(57) A method of analysing a spray of liquid (8) from a nozzle comprises: receiving a fluorescent liquid composition comprising fluorophores of a first type and fluorophores of a second type, wherein the fluorophores of the first type are excitable by absorption of electromagnetic radiation in a first absorption wavelength band and are configured to emit electromagnetic radiation, following excitation, in a first emission wavelength band, and wherein the fluorophores of the second type are excitable by absorption of electromagnetic radiation in a second absorption wavelength band and are configured to emit electromagnetic radiation, following excitation, in a second emission wavelength band, wherein the first emission wavelength band overlaps with the second absorption wavelength band; ejecting the fluorescent liquid composition from the nozzle to generate a spray; projecting, within a sheet plane, a sheet of light (5) through the spray, wherein the light comprises wavelengths within the first absorption wavelength band and within the second absorption wavelength band; capturing, in a side scattering orientation, light scattered by the spray within the sheet plane and determining a first intensity corresponding to an intensity of the captured light within the first emission wavelength band and a second intensity corresponding to an intensity of the captured light within the second emission wavelength band; and determining a characteristic of the spray based on the first intensity and the second intensity.

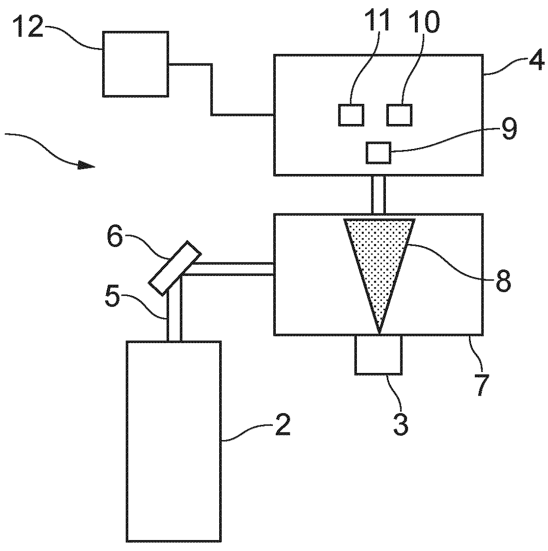

FIG. 1

EP 4 624 903 A1

## Description

### Field

The present disclosure concerns methods and systems for analysing sprays of liquids.

### Background

A liquid spray is a collection of liquid droplets dispersed in a gas ejected from an orifice such as a nozzle. Liquid sprays are commonly generated in order to distribute liquid throughout a three-dimensional volume or across a substrate surface or in order to increase the surface area of the liquid to facilitate evaporation or chemical reactions. Liquid sprays therefore have many important industrial and domestic applications including: the generation of multiphase (e.g., liquid and gas) mixtures within multiphase reactors in the chemical industry; the injection of fuel into combustion engines; propulsion systems; crop spraying; aerial firefighting; nebulisers for drug delivery; and cosmetics and perfume deployment.

The development, design and evaluation of spray forming devices such as nozzles requires methods for characterising the spray generated, for example, in terms of the size, shape, mass, composition, distribution and/or trajectory of liquid droplets within the spray. For example, methods of accurately measuring the liquid, mass or concentration distribution in a spray would be desirable. This could provide a measure of flow uniformity for nozzles used in industrially important processes, such as the injection of fuel into a jet engine.

It will be appreciated that a liquid spray (i.e., as a collection of droplets) can take many different shapes. For example, liquid may be sprayed to form a generally conical, sheet-like or columnar distribution of droplets. The shape of a liquid spray may be determined at least in part by the spray forming device (e.g., nozzle) design. The shape of a liquid spray may also be influenced by impinging gas streams, spray forming device movement during spray generation, etc. Methods of accurately measuring the liquid, mass or concentration distribution in any shape of spray would be desirable.

Existing methods for characterising liquid sprays are either based on mechanical or optical designs.

In mechanical systems, ejected spray droplets are physically collected in a plurality of bins of a collection device placed in the spray and the mass or volume of liquid collected in the bins is measured. Such methods can provide an estimate of the physical distribution of droplets within the spray. However, mechanical methods have the disadvantage that the presence of the droplet collection device in the spray itself alters the trajectory of the liquid droplets and can lead to significant errors.

In optical systems, ejected spray droplets are imaged and parameters such as the size distribution of droplets are estimated from the images. Various optical methods are known, but these are commonly found to be slow (e.g., Phase Doppler Anemometry), to require computationally intensive convoluted image reconstruction algorithms (e.g., measurement by En'Urga attenuation tomography patternators), and/or to suffer from imaging errors and significant systematic uncertainties (e.g., Mie scattering).

Improved methods and systems for analysing liquid sprays would therefore be desirable.

### Summary of Disclosure

According to a first aspect of the present disclosure, there is provided a method of analysing a spray of liquid from a nozzle. The method comprises: receiving a fluorescent liquid composition comprising fluorophores of a first type and fluorophores of a second type, wherein the fluorophores of the first type are excitable by absorption of electromagnetic radiation in a first absorption wavelength band and are configured to emit electromagnetic radiation, following excitation, in a first emission wavelength band, and wherein the fluorophores of the second type are excitable by absorption of electromagnetic radiation in a second absorption wavelength band and are configured to emit electromagnetic radiation, following excitation, in a second emission wavelength band, wherein the first emission wavelength band overlaps with the second absorption wavelength band; ejecting the fluorescent liquid composition from the nozzle to generate a spray; projecting, within a sheet plane, a sheet of light through the spray, wherein the light comprises wavelengths within the first absorption wavelength band and within the second absorption wavelength band; capturing, in a side scattering orientation, light scattered by the spray within the sheet plane and determining a first intensity corresponding to an intensity of the captured light within the first emission wavelength band and a second intensity corresponding to an intensity of the captured light within the second emission wavelength band; and determining a characteristic of the spray based on the first intensity and the second intensity.

It will be understood that a spray of liquid is a collection of liquid droplets (i.e., droplets of liquid phase) dispersed in a gas (i.e., gas phase). The liquid droplets may be generated by the nozzle in a process known as atomization. The liquid droplets are typically dynamic in the sense that the liquid droplets travel away from the nozzle. The spray of liquid is therefore typically dynamic in the sense that the distribution of liquid droplets within the spray evolves as a function of time

as the liquid droplets travel away from the nozzle and/or as more liquid droplets are generated at the nozzle.

It will be appreciated that in the present context, a nozzle is a device configured to generate the spray of liquid, for example, by the process known as atomization. Any suitable type of nozzle may be used. The nozzle may be a jet nozzle such as a gas jet nozzle, a high velocity nozzle, a spray nozzle, an atomizer, a rotary atomizer, an ultrasonic atomizer, an electrostatic atomizer, etc.

Analysing the spray of liquid comprises determining the characteristic of the spray. The characteristic of the spray may be a characteristic of liquid within the spray (for example, a characteristic related to the composition of the liquid within the spray), a characteristic of droplets within the spray (for example, a characteristic related to the composition, shape and/or dimensions of droplets (whether taken individually or collectively (e.g., on average)) within the spray) and/or a characteristic of the (e.g., circumferential) distribution of droplets within the spray (for example, a characteristic related to the compositional (e.g., concentration), mass, volume and/or size distribution of the droplets within the spray). The characteristic of the spray may be a characteristic of the spray (e.g., a characteristic of liquid within the spray, droplets within the spray and/or the distribution of droplets within the spray) at a single point in time, at a plurality of different points in time (for example, as a function of time), averaged over a plurality of different points in time (e.g., over a period of time) or which is substantially independent of time.

In some examples, the characteristic of the spray is related to (e.g., provides a measure of) the spatial (e.g., circumferential) distribution of liquid/gas concentration in the spray.

It will be appreciated that a fluorescent liquid composition is a liquid composition capable of undergoing fluorescence when illuminated by electromagnetic radiation.

Fluorescence is the emission of light by a substance that has previously absorbed electromagnetic radiation (e.g., light). Fluorescence typically occurs as a three-stage process: excitation of molecules within the substance by the absorption of electromagnetic radiation having a first wavelength, thereby generating excited electronic singlet states; a period of time during which some of the energy of the excited electronic singlet states may be dissipated by, for example, intermolecular interactions within the substance; and fluorescent emission of light having a second wavelength longer than the first wavelength as molecules return to their electronic ground states. The difference in energy or wavelength between the exciting electromagnetic radiation and the fluoresced light is known as the Stokes shift.

Molecules which are capable of fluorescing (i.e., which can reemit light following excitation by electromagnetic radiation) are known as fluorophores. There are many different types of fluorescent molecule, as discussed in detail elsewhere in this specification.

The fluorescent liquid composition according to the present disclosure comprises fluorophores of a first type and fluorophores of a second type. The fluorophores of the first type and the fluorophores of the second type are different from one another in the sense that the fluorophores of the first type and the fluorophores of the second type have different fluorescent absorption and emission spectra. The fluorophores of the first type and the fluorophores of the second type may therefore be chemically different from one another (i.e., they have different molecular formulae) or they may be different (e.g. structural) isomers (i.e., they share the same molecular formula but have different atomic arrangements).

The fluorophores of the first type are excitable by absorption of electromagnetic radiation in a first absorption wavelength band and are configured to emit electromagnetic radiation, following excitation, in a first emission wavelength band. The fluorophores of the second type are excitable by absorption of electromagnetic radiation in a second absorption wavelength band and are configured to emit electromagnetic radiation, following excitation, in a second emission wavelength band. The first emission wavelength band overlaps with the second absorption wavelength band. It will be appreciated that an absorption wavelength band of a substance is a region of an absorption spectrum for the substance over which the substance exhibits non-negligible (i.e., substantial) absorption of electromagnetic radiation. It will further be appreciated that an emission wavelength band of a substance is a region of an emission spectrum for the substance over which the substance exhibits non-negligible (i.e., substantial) emission of electromagnetic radiation.

The fluorescent liquid composition may comprise one or more liquid components in addition to the fluorophores of the first type and the fluorophores of the second type. For example, the fluorescent liquid composition may comprise one or more (e.g., base) liquids to which fluorophores of the first type and the fluorophores of the second type are added (for example, as fluorescent dyes). For example, the fluorescent liquid composition may comprise one or more (e.g., base) liquids (e.g., water, liquid fuel, perfume, etc.) whose spray behaviour is to be analysed, to which fluorophores of the first type and the fluorophores of the second type are added (for example, as fluorescent dyes). Alternatively, one or both of the fluorophores of the first type and the fluorophores of the second type may be contained within the one or more (e.g., base) liquids (e.g., water, liquid fuel, perfume, etc.) whose spray behaviour is to be analysed. For example, some components of hydrocarbon-based liquid fuels may themselves be fluorescent. In some cases, the fluorescent liquid composition may consist essentially of the fluorophores of the first type and the fluorophores of the second type.

The fluorescent liquid composition may comprise the fluorophores of the first type at a first concentration and the fluorophores of the second type at a second concentration. The first and second concentrations may be the same or different.

It will be appreciated that the present disclosure is concerned with fluorescence of the florescent liquid

composition in liquid-phase droplets of the spray rather than with, for example, fluorescence of the liquid composition when in a gas phase. Therefore, evaporation of the fluorescent liquid composition during spraying may be negligible. For example, it may be that less than about 1 wt. % of the fluorescent liquid composition evaporates during spraying.

It will be appreciated that the sheet of light is formed by projecting light in such a way that the light is focused into a substantially two-dimensional plane (at least within the region of space in which the sheet of light intersects the spray) known as the sheet plane. The sheet of light is typically substantially flat (at least within the region of space in which the sheet of light intersects the spray). The orientation of the sheet of light may be characterised by the normal (e.g., the normal axis) to the sheet plane. The sheet of light may have a thickness in the direction of the normal from about 0.1 mm to about 25 mm (e.g. 25.0 mm), for example, from about 0.1 mm to about 20 mm (e.g., to about 20.0 mm), or from about 0.1 mm to about 15 mm (e.g., to about 15.0 mm), or from about 0.1 mm to about 10 mm (e.g., to about 10.0 mm), or from about 0.1 mm to about 5 mm (e.g. to about 5.0 mm), or from about 0.1 mm to about 2 mm (e.g., to about 2.0 mm), or from about 0.1 mm to about 1 mm (e.g., to about 1.0 mm), for example, about 0.5 mm.

The sheet of light may be projected through any portion of the spray. The sheet of light may be projected through the spray in any direction.

The spray of fluorescent liquid composition may be ejected from the nozzle along an ejection axis. The sheet of light may be projected through the spray in any direction relative to the ejection axis.

In some examples, the sheet of light may be projected through the spray such that the sheet plane extends substantially orthogonal to the ejection axis (i.e., such that the normal axis of the sheet plane extends substantially parallel to the ejection axis). The normal axis of the sheet plane may be inclined with respect to the ejection axis by no more than about 10°, for example, no more than about 5°, or no more than about 2.5°, or no more than about 1°, or no more than about 0.5°, or no more than about 0.1°.

However, in other examples, the sheet of light may be projected through the spray such that the normal axis of the sheet plane is inclined with respect to the ejection axis by more than about 10°.

In some examples, the sheet of light may be projected through the spay such that the sheet plane extends substantially parallel to the ejection axis (i.e., such that the normal axis of the sheet plane is substantially orthogonal to the ejection axis). The normal axis of the sheet plane may be inclined with respect to the ejection axis by no less than about 80°, for example, no less than about 85°, or no less than about 87.5°, or no less than about 89°, or no less than about 89.5°, or no less than about 89.9°.

The direction in which the sheet of light is projected through the spray may be selected based on the region of the spray to be characterised. For example, in the case of a conical spray, the sheet of light may be projected through the spray such that the sheet plane extends substantially orthogonal to the ejection axis in order to characterise a circumferential distribution of liquid droplets within a section of the conical spray. Alternatively, the sheet of light be projected through the spray such that the sheet plane extends substantially parallel to the ejection axis in order to characterise the evolution of the spray as a function of distance from the nozzle.

Light scattered by the spray within the sheet plane is captured in a side scattering orientation. It will be appreciated that the direction in which light is scattered by the spray can be classified generally into three types: forward scattered light; backwards scattered light; and side scattered light. Forward scattered light is scattered forwards, in the same general direction as the direction in which the sheet of light is projected (i.e., towards a detector). Backwards scattered light is scattered backwards, in the opposite general direction as the direction in which the sheet of light is projected (i.e., back towards the source of the sheet of light). Side scattered light is scattered sideways relative to (e.g., substantially orthogonal to) the direction in which the sheet of light is projected. It will be appreciated that capturing the light in a side scattering orientation therefore means capturing light which is side scattered by the spray.

Capturing the light in side scattering orientation may comprise capturing light scattered by the spray within the sheet plane into a side scattering direction which is inclined by at least about 45°, for example, at least about 50°, or at least about 60°, or at least about 70°, or at least about 80°, or at least about 85°, or at least about 87.5°, or at least about 89°, relative to the direction in which the sheet of light is projected.

Capturing the light in side scattering orientation may comprise capturing light scattered by the spray within the sheet plane into a side scattering direction which is inclined by no more than about 45°, for example, no more than about 40°, or no more than about 30°, or no more than about 20°, or no more than about 10°, or no more than about 5°, or no more than about 2.5°, or no more than about 1°, relative to the normal to the sheet plane (i.e., the normal axis of the sheet plane).

Capturing the light in side scattering orientation may comprise capturing light scattered by the spray within the sheet plane into a side scattering direction which is substantially orthogonal to the direction in which the sheet of light is projected (i.e., into a direction substantially parallel to the ejection axis).

Capturing light scattered by the spray within the sheet plane may comprise capturing substantially all of the light scattered by the spray within the sheet plane into a particular direction. For example, capturing light scattered by the spray within the sheet plane may comprise capturing substantially all wavelengths of the light scattered by the spray within the sheet plane into the particular direction. Alternatively, capturing light scattered by the spray within the sheet plane may comprise capturing one or more particular wavelengths and/or wavelength bands of the light scattered by the spray within

the sheet plane into the particular direction.

The method according to the first aspect enables characteristics of liquid sprays to be determined more quickly, with less taxing computation, and/or with greater accuracy as compared to known methods. Improvements are achieved by the use of a fluorescence-based method, taking into account emission-reabsorption effects, with emitted light being measured in a side scattering orientation.

As described hereinabove, fluorescence of a fluorophore involves the fluorophore absorbing a photon having a first wavelength and later emitting a photon having a longer wavelength. How much the wavelength changes is dependent on the conformational changes and molecular interactions which happen between absorption and emission, such processes typically causing a dissipation of energy as the excited singlet state relaxes to a relaxed singlet state before the emissive transition to the ground state. Other processes such as coalitional quenching, fluorescence energy transfer and intersystem crossing can also lead to depopulation of the excited singlet state, reducing the fluorescence quantum yield (the ratio of fluorescence photos emitted to photons absorbed) for a given sample.

When a liquid sample is fluorescent, the distribution of liquid droplets in a spray of the sample can in principle be determined by stimulating fluorescence of the fluorophores (for example, using a sheet of light which intersects the spray) and imaging the spray using detectors configured to detect wavelengths emitted by the fluorophores. An emitted signal can in principle be distinguished from the background signal of the stimulating light because of the change in wavelength.

However, it is known that when a fluorescent liquid sample is excited with light, the intensity of induced fluorescence depends on the particular fluorophore(s) present, the concentration of the fluorophore(s) in the sample, the exciting light intensity and any other parameters which affect the fluorescence process. In practice, it is not possible to produce light sheets having constant light intensity (particularly when using pulsed laser sources) - instead, light intensity tends to vary spatially within the sheet. When only a single type of fluorophore is used, it is not possible to separate out the contributions of the exciting light intensity and other factors on the emitted light intensity. This leads to significant errors when characterising the two-dimensional distribution of fluorophores. However, it has been found that a ratiometric technique based on the use of two different types of fluorophores enables such errors to be suppressed. Such a technique is known as emission reabsorption induced fluorescence patternation.

The basic principles of emission reabsorption induced fluorescence are described in Emission reabsorption laser induced fluorescence (ERLIF) film thickness measurement, Carlos H. Hidrovo and Douglas P. Hart, Meas. Sci. Technol. 12 (2001) 467-477, which is hereby incorporated by reference in its entirety. The methodology described in this paper was, however, developed for the purpose of characterising the thickness of thin films imaged in a backscatter orientation.

In contrast, the present inventors have developed a method for characterising liquid sprays in a side scattering orientation by applying related principles. This method is described in detail elsewhere in this specification. However, in general, the inventors have found that using the intensities of light emitted by two different fluorophores enables errors associated with spatial variations of the intensity of the light sheet to be suppressed and for information relating to the depth of droplets (i.e., in the thickness direction of the light sheet) or liquid volume fraction to be extracted. Use of a side scatter imaging mode enables a thin section of the spray to be selectively characterised and for the circumferential distribution of droplets within the spray to be analysed. Surprisingly, the inventors have also found that use of a side scatter mode simplifies the imaging process and mathematics behind it. The method may therefore be characterised as an emission reabsorption induced fluorescence measurement method carried out in a side scatter orientation.

The first intensity corresponds to an intensity of the captured light within the first emission wavelength band. For example, the first intensity may be the said intensity of the captured light within the first emission wavelength band. Alternatively, the first intensity may be a quantity related to (for example, proportional to or calculated from) the said intensity of the captured light within the first emission wavelength band.

Determining the first intensity may comprise measuring the said intensity of the captured light within the first emission wavelength band. Determining the first intensity may comprise measuring a quantity (e.g., a characteristic of a signal) related to (e.g., proportional to or otherwise dependent on) the said intensity of the captured light within the first emission wavelength band. Determining the first intensity may comprise calculating the first intensity from the measured quantity. Alternatively, determining the first intensity may comprise measuring the first intensity (e.g., directly).

The second intensity corresponds to an intensity of the captured light within the second emission wavelength band. For example, the second intensity may be the said intensity of the captured light within the second emission wavelength band. Alternatively, the second intensity may be a quantity related to (for example, proportional to or calculated from) the said intensity of the captured light within the second emission wavelength band.

Determining the second intensity may comprise measuring the said intensity of the captured light within the second emission wavelength band. Determining the second intensity may comprise measuring a quantity (e.g., a characteristic of a signal) related to (e.g., proportional to or otherwise dependent on) the said intensity of the captured light within the second emission wavelength band. Determining the second intensity may comprise calculating the second intensity from the measured quantity. Alternatively, determining the second intensity may comprise measuring the second intensity (e.g., directly).

The characteristic of the spray is determined based on the first intensity and the second intensity. For example,

the characteristic of the spray may be calculated based on the first intensity and the second intensity. For example, the characteristic of the spray may be determined (e.g., calculated) based on a ratio or quotient of the first intensity and the second intensity relative to one another.

The first intensity may be determined based on wavelengths of the captured light lying in the first emission band but not in the first absorption band. That is to say, the first intensity may be determined based on wavelengths of the captured light for which the fluorophores of the first type exhibit substantial levels of emission but negligible levels of absorption. In other words, it may be that the fluorophores of the first type do not exhibit substantial levels of self-reabsorption, at least at the wavelengths based on which the first intensity is determined.

The second intensity may be determined based on wavelengths of the captured light lying in the second emission band but not in the second absorption band. That is to say, the second intensity may be determined based on wavelengths of the captured light for which the fluorophores of the second type exhibit substantial levels of emission but negligible levels of absorption. In other words, it may be that the fluorophores of the second type do not exhibit substantial levels of self-reabsorption, at least at the wavelengths based on which the second intensity is determined.

The characteristic may be (or may be related to, for example, indicative of, e.g., proportional to) a liquid to gas (e.g., surrounding air) ratio. The liquid to gas ratio may be expressed as a mass of the fluorescent liquid composition per unit volume of gas. In cases where the fluorescent liquid composition comprises liquid fuel, the liquid to gas ratio may be a fuel to gas ratio, for example, a fuel to air ratio. It will be appreciated that, in this context, the term "gas" refers to the surrounding gas (e.g., air) into which the fluorescent liquid composition is sprayed and does not include evaporated fluorescent liquid composition.

The liquid to gas ratio may be determined based on (e.g., calculated from or proportional to) a quotient of the first intensity and the second intensity.

The light may be captured at one or more image sensors each having a plurality of pixels. The image sensor(s) may be image sensor(s) of a (i.e., digital) camera. The image sensor(s) may be charge-coupled devices (CCD) or active-pixel (CMOS) sensors.

The light scattered by the spray at a particular point in time may be captured at the one or more image sensors.

It may be that the first intensity and the second intensity are determined (i.e., separately) for each of one or more pixels of the one or more image sensors. For example, it may be that the first intensity and the second intensity are determined (i.e. separately) for each of the pixels of the one or more image sensors. It may be that the characteristic of the spray is determined based on a pixel-by-pixel basis based on the said determined first intensities and second intensities. It may be that the characteristic of the spray is determined based on a droplet-by-droplet basis based on determined first intensities and second intensities for each pixel corresponding to a given droplet.

It may be that, for each pixel, a depth (i.e., in the side scattering view direction, which corresponds to a direction perpendicular to the sheet of light when the captured scattered light is scattered in a side scattering direction which is perpendicular to the sheet of light) of a droplet of the fluorescent liquid composition at a respective pixel is determined based on a quotient of the first intensity and the second intensity. Such a depth may be determined when the spray of liquid is sparse in the sense that each individual droplet has a clear, well-defined image.

It will be understood that an imaged droplet of the fluorescent liquid composition may correspond to (e.g., comprise) more than one pixel. In such cases, the depth of the droplet of the fluorescent liquid composition at a respective pixel may be the depth of the region of the said droplet corresponding to said pixel. By determining the depth of the droplet at a plurality of pixels, it may be possible to reconstruct the three-dimensional structure (e.g., shape) of the droplet.

In order to determine the three-dimension structure (e.g., shape) of a droplet, it is preferable that the imaged droplet corresponds to (e.g., comprises) at least 5 pixels, for example, at least 10 pixels, or at least 11 pixels. It may be that a diameter of the droplet corresponds to the width of at least 5 pixels, for example, at least 10 pixels, or at least 11 pixels.

It will further be understood that not every pixel will correspond to a droplet (e.g., if the spray of liquid is sparse). In such cases, the depth of the droplet of the fluorescent liquid composition determined for some pixels may be negligible or zero.

It may be that the light scattered by the spray is captured (e.g., at the one or more image sensors) at a plurality of different points in time and that a corresponding first intensity and a corresponding second intensity (e.g., at each pixel) are determined for each point in time. It may be that the characteristic of the spray is determined based on the determined first intensities and second intensities for the plurality of points in time (e.g., for each pixel). For example, it may be that the liquid to gas ratio of the spray is determined based on the determined first intensities and second intensities for the plurality of points in time (e.g., for each pixel).

For example, the light sheet may be pulsed in time as a plurality of pulses. It may that, for each pulse, the light scattered by the spray is captured (e.g., at the image sensor(s)) and a corresponding first intensity and a corresponding second intensity are determined (e.g., for each pixel). It may be that the characteristic of the spray is determined based on the determined first intensities and second intensities for the plurality of pulses (e.g., for each pixel). It may be that the liquid to gas ratio of the spray is determined based on the determined first intensities and second intensities for the plurality of pulses (e.g., for each pixel).

In cases where the light scattered by the spray is captured at a plurality of points in time (e.g., corresponding to a plurality of pulses of the light sheet) and a corresponding first intensity and a corresponding second intensity are determined for each point in time, it may be that a quotient of the corresponding first intensity and the corresponding second intensity is determined for each point in time (e.g., at each pixel). It may be that the liquid to gas ratio of the spray for a given pixel is determined from (e.g., by averaging over) the plurality of quotients of first intensities and second intensities determined for said pixel. Such a liquid to gas ratio may be determined when the spray of liquid is sparse (in the sense that each individual droplet has a clear, well-defined image) or when the spray of liquid is dense (in the sense that there are overlapping droplet images). The method may comprise determining a distribution (e.g., a map) of the liquid to gas ratio for the spray of liquid, for example, to provide a measure of liquid spatial distribution or circumferential flow uniformity.

Capturing light scattered by the spray in the sheet plane may comprise directing light scattered by the spray in the sheet plane towards the image sensor(s). Scattered light may be directed by any suitable means known in the art, such as mirrors, lenses, prisms, fibre optics, etc.

It may be that light in the first emission wavelength band is captured in a first image sensing region and light in the second emission wavelength band is captured in a second image sensing region. The first and second image sensing regions may be different regions of the same image sensor. Alternatively, it may be the first image sensing region is a region of (e.g., corresponds to) a first image sensor and the second image sensing region is a region of (e.g., corresponds to) a second image sensor (e.g., the first and second image sensors being distinct and/or physically separate image sensing components).

Capturing light scattered by the spray in the sheet plane may comprise separating light received from the sheet plane into light in the first emission wavelength band and light in the second emission wavelength band.

Capturing light scattered by the spray in the sheet plane may comprise directing light in the first emission wavelength band to the first image sensing region and directing light in the second emission wavelength band to the second image sensing region.

Capturing light scattered by the spray in the sheet plane may comprise separating light received from the sheet plane to direct light in the first emission wavelength band to the first image sensing region and light in the second emission wavelength band to the second image sensing region.

The light may be separated by any suitable means known in the art, such as dichroic mirrors, dichroic filters, prisms, etc.

For example, the light may be separated by a dichroic mirror. The dichroic mirror may be an ultraflat dichroic mirror, for example, as available from Chroma Technology Corp, USA.

The dichroic mirror may have a surface flatness characterised by a Peak-to-Valley deformation of no greater than about 10 waves/inch, for example, no greater than about 5 waves/inch, or no greater than about 3 waves/inch, or no greater than about 2 waves/inch, or no greater than about 1 wave/inch, or no greater than about 0.5 waves/inch, or no greater than about 0.25 waves/inch. Peak-to-Valley deformation surface flatness may be determined by laser interferometry, for example, using a laser having a wavelength of 633 nm.

The dichroic mirror may have a radius of curvature no less than about 50 m, for example, no less than about 100 m, or no less than about 150 m, or no less than about 200 m, or no less than about 250 m, or no less than about 254 m.

The dichroic mirror may be thin. The dichroic mirror may be no greater than about 5 mm thick, for example, no greater than about 4 mm thick, or no greater than about 3 mm thick, or no greater than about 2 mm thick, or no greater than about 1 mm thick.

The light may be separated by a prism beam splitter. A prism beam splitter may be used to project two different wavelengths of electromagnetic radiation onto a single image sensor (e.g., camera), such that a first image sensing region of the image sensor captures light corresponding to one image of the scene and a second image sensing region of the image sensor captures light corresponding to a second image of the scene, the first and second images being imaged at different wavelengths. A similar result could be achieved by separating the light using a lenticular array or a baffled lenticular array, fitted with an array of filters and mounted between a camera lens and an image sensor.

The light may be separated by a 50:50 beam splitter such as a beam splitter cube. A 50:50 beam splitter may have lower efficiency than a dichroic mirror but can reduce wavefront distortions in comparison to dichroic mirrors having low surface flatness. Similarly, the light may be separated by a polarising beam splitter such as a Wollaston prism.

Alternatively, the first image sensing region (e.g., a first camera) and the second image sensing region (e.g., a second camera) may be configured (e.g., physically arranged) to capture light scattered by the spray in slightly different directions (although still in a side scattering orientation), wherein the first image sensing region captures light in the first emission wavelength band and the second image sensing region captures light in the second emission wavelength band. Such a method may additionally permit measurement of the three-component liquid spray velocity field. Both the first image sensing region (e.g., the first camera) and the second image sensing region (e.g., the second camera) may be configured to image the same region of the liquid spray. Geometric image correction may be used to ensure spatial correspondence between images produced by the first and second image sensing regions, for example, as described in PIV Uncertainty Quantification and Beyond, Wieneke, B.F.A., submitted as a doctoral thesis to the Delft University of

Technology on 12 December 2017, ISBN: 978-94-92516-88-6 (available online at https://doi.org/10.4233/uuid:4ca8c0b8-0835-47c3-8523-12fc356768f3) which is hereby incorporated by reference in its entirety. In such configurations, it may not be necessary to separate the light by, e.g., beam splitting methods.

The method may comprise: projecting the sheet of light through the spray at a plurality of different locations having different distances from the nozzle; at each location, capturing, in a side scattering orientation, light scattered by the spray from the sheet plane and determining a respective first intensity corresponding to an intensity of the captured light within the first emission wavelength band and a respective second intensity corresponding to an intensity of the captured light within the second emission wavelength band; and determining the characteristic of the spray based on the first intensities and the second intensities determined for each of the plurality of different locations. In such a method, the characteristic of the spray may be an averaged characteristic of the spray across the plurality of locations (e.g., it corresponds to a single value for the plurality of locations in combination) or the characteristic of the spray may be a characteristic of the spray which varies as a function of location (e.g., it comprises a plurality of values corresponding to the plurality of locations).

The method may comprise moving the sheet of light between each of the plurality of different locations.

Each of the plurality of different locations have different distances from the nozzle - the positions of the different locations may therefore be determined relative to the position of the nozzle. Moving the sheet of light between each of the plurality of different locations may therefore comprise causing relative movement between the sheet of light and the nozzle. It will be appreciated that said relative movement could be achieved by physically moving the nozzle and/or by moving the position of the sheet of light in space, for example, by moving the source used to generate the sheet of light and/or moving optical components (e.g., mirrors, lenses, prisms, etc) used to direct the sheet of light.

In cases where the method comprises projecting the sheet of light through the spray at a plurality of different locations and determining the characteristic of the spray based on the first intensities and the second intensities determined for each of the plurality of different locations, it may be possible to determine the variation of the characteristic as a function of position within a three-dimensional volume of the spray. For example, it may be possible to determine the three-dimensional variation in liquid concentration.

The fluorophores of the first type and the fluorophores of the second type may both be excitable by electromagnetic radiation having a wavelength from about 300 nm to about 800 nm, for example, from about 400 nm to about 800 nm, or from about 450 nm to about 650 nm, or from about 500 nm to about 550 nm.

The fluorophores of the first and second types typically have different emission and absorption spectra.

It may be that a primary emission peak within the first emission wavelength band (i.e., the wavelength at which the fluorophores of the first type exhibit a primary emission peak in the first emission wavelength band) and a primary emission peak within the second emission wavelength band (i.e., the wavelength at which the fluorophores of the second type exhibit a primary emission peak in the second emission wavelength band) are separated by no less than about 10 nm, for example, no less than about 25 nm, or no less than about 50 nm.

It may be the first emission wavelength band and the second emission wavelength band do not overlap substantially, i.e., they exhibit negligible overlap.

It may be that a primary emission peak within the first emission wavelength band (i.e. the wavelength at which the fluorophores of the first type exhibit a primary emission peak in the first emission wavelength band) and a primary absorption peak within the second absorption wavelength band (i.e., the wavelength at which the fluorophores of the second type exhibit a primary absorption peak in the second absorption wavelength band) are separated by no more than about 100 nm, for example, no more than about 75 nm, or no more than about 50 nm.

It may be that a primary absorption peak within the first absorption wavelength band (i.e., the wavelength at which the fluorophores of the first type exhibit a primary absorption peak in the first absorption wavelength band) and a primary absorption peak within the second absorption wavelength band (i.e., the wavelength at which the fluorophores of the second type exhibit a primary absorption peak in the second absorption wavelength band) are separated from one another by no less than about 10 nm, for example, no less than about 25 nm, or no less than about 70 nm, and/or by no more than about 150 nm, for example, no more than about 125 nm, or no more than about 100 nm.

It may be that the first absorption wavelength band comprises a primary absorption peak at a wavelength from about 450 nm to about 600 nm, for example, from about 500 nm to about 540 nm, or from about 510 nm to about 530 nm.

It may be that the first emission wavelength band comprises a primary emission peak at a wavelength from about 480 nm to about 620 nm, for example, from about 530 nm to about 570 nm, or from about 540 nm to about 560 nm.

It may be that the second absorption wavelength band comprises a primary absorption peak at a wavelength from about 520 nm to about 660 nm, for example, from about 570 nm to about 610 nm, or from about 580 nm to about 600 nm.

It may be that the second emission wavelength band comprises a primary emission peak at a wavelength from about 540 nm to about 680 nm, for example, from about 590 nm to about 630 nm, or from about 600 nm to about 620 nm.

It may be that one or both of the fluorophores of the first type and the fluorophores of the second type are non-protein organic compounds, for example, non-protein aromatic organic compounds.

It may be that one or both of the fluorophores of the first type and the fluorophores of the second type are selected

from the group consisting of xanthene derivatives, cyanine derivatives, squaraine derivatives, ring-substituted squaraines, squaraine rotaxane derivatives, naphthalene derivatives, dansyl derivatives, prodan derivatives, coumarin derivatives, oxadiazole derivatives, anthracene derivatives, pyrene derivatives, acridine derivatives, arylmethine derivatives, tetrapyrrole derivatives, and dipyrromethene derivatives.

It may be that one or both of the fluorophores of the first type and the fluorophores of the second type are selected from the group consisting of fluorescein, fluorescein 555, disodium fluorescein, rhodamine, rhodamine 3B perchlorate, rhodamine 560 chloride, rhodamine 560 perchlorate, rhodamine 575, rhodamine 590 chloride, rhodamine 590 tetrafluoroborate, rhodamine 590 perchlorate, rhodamine 610 chloride, rhodamine 610 tetrafluoroborate, rhodamine 610 perchlorate, rhodamine 640 perchlorate, sulforhodamine 640, X-rhodamine, Lissamine rhodamine B, Oregon green, eosin, Texas red, cyanine, indocarbocyanine, oxacarbocyanine, thiacarbocyanine, merocyanine, Seta dyes, Square dyes, Tau dyes, pyridyloxazole, nitrobenzoxadiazole, benzoxadiazole, anthraquinones, coumarin, hydroxycoumarin, aminocoumarin, methoxycoumarin, Coumarin 440, Coumarin 445, Coumarin 450, Coumarin 456, Coumarin 460, Coumarin 461, Coumarin 478, Coumarin 480, Coumarin 481, Coumarin 485, Coumarin 490, Coumarin 498, Coumarin 500, Coumarin 503, Coumarin 504, Coumarin 510, Coumarin 515, Coumarin 519, Coumarin 521, Coumarin 521T, Coumarin 522B, Coumarin 523, Coumarin 525, Coumarin 535, Coumarin 540, Coumarin 540A, Coumarin 545, DRAQ5, DRAQ7, CyTRAK Orange, cascade blue, Pacific blue, Pacific orange, Lucifer yellow, Nile red, Nile blue, Nile blue 690 perchlorate, cresyl violet, cresyl violet 670 perchlorate, oxazine 170, oxazine 750 perchlorate, proflavin, acridine orange, acridine yellow, auramine, crystal violet, malachite green, porphin, phthalocyanine, bilirubin, pyrromethenes, pyrromethene 546, pyrromethene 556, pyrromethene 567, pyrromethene 580, pyrromethene 597, pyrromethene 605, pyrromethene 650, BODIPY, aza-BODIPY, NBD, R-phycoerythrin, PE-CY5 conjugates, PE-Cy7 conjugates, PerCP-Cy5.5 conjugates, G-DYE100, G-DYE200, G-DYE300, G-DYE400, Cy2, Cy3, Cy3B, Cy3.5, Cy5, Cy5.5, Cy7, TRITC, allophycocyanin, and APC-Cy7 conjugates.

It may be that one or both of the fluorophores of the first type and the fluorophores of the second type have the following chemical structure:

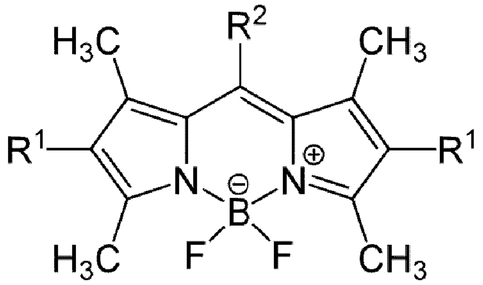

;

wherein $R^1$ is selected from the group consisting of H, $SO_3Na$, $C_2H_5$, $(CH_2)_3CH_3$, and $C(CH_3)_3$, and $R^2$ is selected from the group consisting of $CH_3$, $CH_2$-O-C(=O)$CH_3$, and CN.

It may be that one or both of the fluorophores of the first type and the fluorophores of the second type are pyrromethenes, for example, selected from the group consisting of pyrromethene 546, pyrromethene 556, pyrromethene 567, pyrromethene 580, pyrromethene 597, pyrromethene 605, pyrromethene 650.

It may be that the flurorophores of the first type are pyrromethene 567 and the fluorophores of the second type are pyrromethene 650.

It will be appreciated that the fluorophores used are not necessarily dyes. For example, one or more of the fluorophores used may be inherently present in the liquid composition to be analysed. For example, many hydrocarbons (e.g., present in combustion engine fuel, for example, jet fuel) are naturally fluorescent. The method may therefore be characterised as a "zero dye", "single dye" or "dual dye" (and so on) approach, dependent on whether any of the fluorophores used are considered to be "dyes" which are added to the liquid composition with the sole purpose to providing fluorescence and/or any of the fluorophores are naturally present in the liquid composition being tested.

The fluorescent liquid composition may comprise the fluorophores of the first type at a concentration of no less than about 0.01 mmol/L and no greater than about 10 mmol/L, for example, no less than about 0.1 mmol/L and no greater than about 5 mmol/L, or no less than about 0.5 mmol/L and no greater than about 1 mmol/L and/or the fluorescent liquid composition may comprise the fluorophores of the second type at a concentration of no less than about 0.01 mmol/L and no greater than about 10 mmol/L, for example, no less than about 0.1 mmol/L and no greater than about 5 mmol/L, or no less than about 0.5 mmol/L and no greater than about 1 mmol/L.

It will be appreciated that the method may use more than two different types of fluorophore. For example, the method may use three different types of fluorophore, or four different types of fluorophore, or five different types of fluorophore. It will be appreciated that each different type of fluorophore will be excitable by absorption of electromagnetic

radiation in different absorption wavelength bands and will emit electromagnetic radiation, following excitation, in different emission wavelength bands. Use of multiple different types of fluorophore may improve the accuracy of the technique.

Additionally, or alternatively, accuracy of the technique may be improved by capturing light scattered by the spray in more than two different wavelength bands (for example, corresponding to more than two different spectral lines). The number of different wavelength bands (e.g., spectral lines) to be compared can be increased by increasing the number of different fluorophores used and/or increasing the number of image sensors used (e.g., having different spectral sensitivities and/or being appropriately filtered).

It will be appreciated that any suitable light source may be used to generate the sheet of light.

The light may be laser light. The light may be generated by a laser. Use of laser light may be beneficial because it can be generated monochromatically, at high power, and with high spatial and/or temporal coherence.

Alternatively, the light may be light produced by a light-emitting-diode (LED) source. Use of an LED source may be beneficial because of reduced cost, size, and power requirements.

The fluorescent liquid composition may comprise a liquid fuel, the characteristic of the spray being a fuel-to-air ratio.

The light sheet may be spatially modulated. For example, the light sheet may be spatially modulated using a Ronchi grating, for example, as part of a Structured Laser Illumination Planar Imaging (SLIPI) system. Spatial modulation of the light sheet may reduce multiple light scattering (e.g., when analysing dense sprays) and indirect reflections, reducing imaging artifacts.

The light sheet may comprise (e.g., consist of) narrowband light. The light sheet may comprise (e.g., consist of) monochromatic light. The light sheet may have a spectral linewidth of no more than about 10 $cm^{-1}$, for example, no more than about 5 $cm^{-1}$, or no more than about 2 $cm^{-1}$, or no more than about 1 $cm^{-1}$, or no more than about 0.5 $cm^{-1}$, or no more than about 0.1 $cm^{-1}$. The light sheet may have a spectral width characterised by a Full Width at Half Maximum (FWHM) of no more than about 0.05 nm, for example, no more than about 0.01 nm, or no more than about 0.005 nm, or no more than about 0.001 nm. It may be that the spectral content of the light sheet does not vary (e.g. substantially) in time.

It will be appreciated that the term "light" is used throughout this application and the appended claims to refer to electromagnetic radiation in general, and in particular, electromagnetic radiation having a wavelength capable of being absorbed by and/or emitted by fluorophores by fluorescence. Accordingly, "light" is not necessarily limited to (although it includes) optical or visible electromagnetic radiation and it may also include ultraviolet (e.g., near ultraviolet) electromagnetic radiation and/or infrared (e.g., near infrared) electromagnetic radiation.

In a second aspect of the present disclosure, there is provided a system for analysing a spray of liquid. The system comprises: an injection system configured to eject a fluorescent liquid composition into a volume along an ejection axis, to thereby generate a spray within the volume; an illumination system configured to emit a sheet of light into the volume; an acquisition system configured to capture light from the volume, and to determine intensities of captured light at at least two distinct wavelengths, wherein the volume is disposed between the injection system and the acquisition system such that the acquisition system is configured to capture a side scatter of light from the sheet of light scattered by the spray of fluorescent liquid composition in the volume; and a controller configured to carry out a method according to the first aspect.

The second aspect may have any feature or characteristic as described hereinabove in relation to the first aspect.

For example, the injection system may comprise a nozzle through which the fluorescent liquid composition may be ejected to form the spray of liquid. Any suitable type of nozzle may be used. The nozzle may be a jet nozzle such as a gas jet nozzle, a high velocity nozzle, a spray nozzle, an atomizer, a rotary atomizer, an ultrasonic atomizer, an electrostatic atomizer, etc.

The illumination system may comprise a light source such as a laser light source or an LED light source.

The illumination system may further comprise one or more components (e.g., mirrors, lenses, filters, prisms, etc.) configured to generate the sheet of light from light emitted by the light source and to direct the sheet of light into the volume and through the spray.

The illumination system may be configured to emit the sheet of light within a sheet plane extending substantially orthogonal to the ejection axis (i.e., such that the normal axis of the sheet plane extends substantially parallel to the ejection axis). The normal axis of the sheet plane may be inclined with respect to the ejection axis by no more than about 10°, for example, no more than about 5°, or no more than about 2.5°, or no more than about 1°, or no more than about 0.5°, or no more than about 0.1°.

The acquisition system may comprise one or more image sensors having a plurality of pixels. The image sensor(s) may be image sensor(s) of a (i.e., digital) camera. The image sensor(s) may be charge-coupled device(s) (CCD) or active-pixel (CMOS) sensor(s).

Components of the injection system (e.g., the nozzle), the illumination system and the acquisition system may be arranged such that the acquisition system captures the side scatter of light from the sheet of light scattered by the spray of fluorescent liquid composition in the volume (i.e., such that the acquisition system captures the scattered light in a side scattering orientation).

Capturing the light in a side scattering orientation may comprise capturing light scattered by the spray within the sheet plane into a side scattering direction which is inclined by at least about 45°, for example, at least about 50°, or at least about 60°, or at least about 70°, or at least about 80°, or at least about 85°, or at least about 87.5°, or at least about 89°, relative to the direction in which the sheet of light is projected.

Capturing the light in a side scattering orientation may comprise capturing light scattered by the spray within the sheet plane into a side scattering direction which is inclined by no more than about 45°, for example, no more than about 40°, or no more than about 30°, or no more than about 20°, or no more than about 10°, or no more than about 5°, or no more than about 2.5°, or no more than about 1°, relative to the normal to the sheet plane (i.e., the normal axis of the sheet plane).

Capturing the light in a side scattering orientation may comprise capturing light scattered by the spray within the sheet plane into a side scattering direction which is substantially orthogonal to the direction in which the sheet of light is projected (i.e., into a direction substantially parallel to the ejection axis).

The controller may comprise one or more processors. The one or more processors may be in electronic communication with a memory which stores a computer program to be executed by the one or more processors. The computer program may comprise instructions which, when executed by the one or more processors, cause the controller to carry out the method according to the first aspect.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

## Brief Description of the Drawings

Embodiments will now be described by way of example only, with reference to the Figures, in which:

**Figure 1** is a schematic illustration of system for analysing a spray of liquid;

**Figure 2** is a schematic illustration of a sheet of light intersecting a spray of liquid droplets in the system of Figure 1;

**Figure 3** is an illustration of apparatus for separating scattered light into light of two different wavelengths for use in the system of Figure 1;

**Figure 4** is a schematic illustration of energy level transitions involved in fluorescence;

**Figure 5** is a schematic illustration of overlapping emission and absorption wavelength bands in emission reabsorption induced fluorescence methods;

**Figure 6** shows (a) an image of a spray of liquid droplets and (b) a magnified image of one of said liquid droplets;

**Figure 7** shows (a) an image of a single liquid droplet produced by combining measured first and second intensities of light scattered in first and second emission wavelength bands associated with fluorescence of first and second fluorophores of different types contained in the liquid and (b) a map of the quotient of the first intensity to the second intensity for the same droplet;

**Figure 8** illustrates how image (a) of Figure 7 can be converted into a map of droplet depth; and

**Figure 9** shows (a) an image of a spray of liquid droplets produced based on measured first intensities of light scattered in a first emission wavelength band associated with fluorescence of a first type of fluorophore contained in the liquid, (b) a map of the quotient of the first intensities to measured second intensities of light scattered in a second emission wavelength band associated with fluorescence of a second different type of fluorophore contained in the liquid, and (c) an image obtained by averaging quotients obtained as in (b) for a plurality of measurements carried out at a plurality of different times.

## Detailed Description

### *Apparatus*

With reference to Figure 1, a system 1 for analysis of a spray of liquid includes an illumination system 2, an injection system 3 and an acquisition system 4. The illumination system 2 is configured to generate a sheet of light 5. The system 1 includes a mirror 6 configured to direct the sheet of light 5 into injection space 7. The injection system is configured

to inject a spray 8 of liquid into the injection space 7. Acquisition system 4 is arranged in a side scattering orientation so as to receive light side scattered by the spray of liquid from the sheet of light 5. The acquisition system includes a dichroic mirror 9 for splitting received light into two different wavelength bands and two image sensors 10 and 11 each configured to receive light in a respective one of the wavelength bands from the dichroic mirror. The system 1 further includes a controller 12 operably coupled to the acquisition system.

In the example shown in Figure 1, the illumination system 2 includes a Nd:YAG laser and suitable optics for generating the sheet of light. In some cases, the laser is operable in a pulsed mode to produce a pulsed sheet of light. In some cases, the illumination system 2 includes a modulator for spatially modulating the sheet of light, for example using a Ronchi grating (e.g., as part of a Structured Laser Illumination Planar Imaging (SLIPI) system). However, it will be appreciated that the details of the illumination system 2 may be varied. For example, the illumination system 2 may include different types of laser (e.g., which generate light at different wavelengths) or may include other types of light source such as Light Emitting Diodes (LEDs) dependent on the composition, density and volume of the spray of liquid to be analysed.

In the example shown in Figure 1, the injection system 3 includes a nozzle through which liquid can be sprayed into the injection space 7 in the direction of (i.e., towards) the acquisition system 4. The mirror 6 is arranged to direct the sheet of light 5 into the injection space 7 such that the sheet of light intersects the spray of liquid at an approximately right angle. For example, Figure 2 illustrates schematically sheet of light 5 being projected in the direction indicated by arrow 13 and shaded area 14 corresponds to a region of the liquid spray intersected by the sheet of light. The direction of travel of the spray is indicated by arrow 15. It will be appreciated that the components and physical arrangement of the illumination system 2, the mirror 6 and the injection system 3 may be varied so long as a sheet of light is generated which intersects a spray of liquid. If the sheet of light intersects the spray of liquid at approximately right angles (i.e., such that a normal to the sheet of light is substantially parallel to the direction in which the spray of liquid is ejected from the nozzle), characterisation of the circumferential distribution of droplets within the spray may be possible.

In the example shown in Figure 1, the acquisition system 4 includes the dichroic mirror 9 for receiving light side scattered by the spray of liquid from the sheet of light 5 and splitting the light into two different wavelength bands. The acquisition system 4 also includes suitable optics for directing light in the separated wavelength bands to different image sensors 10 and 11 for imaging the illuminated section 14 of the spray of liquid. For example, Figure 3 illustrates how a received light beam containing wavelengths at 568 nm and 620 nm can be split by a dichroic mirror into separate wavelength beams and redirected for transmission to different image sensors. In some examples, the dichroic mirror is an ultra-flat dichroic mirror (e.g., having a Peak-to-Valley deformation of no greater than about 10 waves/inch, for example, no greater than about 5 waves/inch, or no greater than about 2 waves/inch, or no greater than about 1 wave/inch, or no greater than about 0.5 waves/inch, or no greater than about 0.25 waves/inch).

It will be appreciated, however, that the components and physical arrangement of the acquisition system 2 may be varied so long as light scattered by the spray of liquid is captured in a substantially side scattering orientation. It will also be appreciated that the dichroic mirror could be replaced by any suitable beam splitting devices, such as a prism beam splitter or a 50:50 beam splitter. In other cases, the acquisition system 2 may not include a beam splitting device; in such cases, image sensors 10 and 11 may be sensitive to, or fitted with suitable filters which select, light in different wavelength bands and both sensors may be arranged so as to receive light side scattered by region 14 of the spray at slightly different orientations. The important characteristic of the acquisition system is that it is able to capture side scattered light in at least two different wavelength bands.

In the example shown in Figure 1, the controller 12 is operable to control operation of the system 1 (including the illumination system 2, the injection system 3 and the acquisition system 4). In particular, the controller 12 includes a processor in electronic communication with a memory storing computer executable program code comprising instructions which, when executed on the processor, cause the controller to control operation of the system 1. However, it will be appreciated that in other cases, the controller 12 may be operable to control operation of only one or a subset of the components of the system 1. For example, it may be that the system 1 comprises multiple controllers for controlling different components of the system 1. In some cases, it may be that components of the system 1 are manually controllable.

In the example shown in Figure 1, the controller 12 is also operable to process output signals generated by the image sensors 10 and 11 to analyse the spray of liquid (by any of the methods described elsewhere in this application). In particular, the memory stores computer executable program code comprising instructions which, when executed on the processor, cause the controller to process output signals generated by the image sensors 10 and 11 to analyse the spray of liquid. However, it will be appreciated that in other cases, output signals generated by the image sensors 10 and 11 may be transmitted to and/or stored for subsequent transmission to a remote processor for analysis.

*Emission Reabsorption Induced Fluorescence*

System 1 is configured to analyse the spray of liquid based on the principles of emission reabsorption (laser) induced fluorescence (ER(L)IF).

Basic principles of ER(L)IF are described in Emission reabsorption laser induced fluorescence (ERLIF) film

thickness measurement, Carlos H. Hidrovo and Douglas P. Hart, Meas. Sci. Technol. 12 (2001) 467-477, which is hereby incorporated by reference in its entirety. The methodology described in this paper was, however, developed for the purpose of characterising the thickness of thin films (rather than liquid sprays) imaged in a backscatter orientation (rather than in a side scatter orientation).

ER(L)IF is also described in Measurements of fuel thickness for prefilming atomisers at elevated pressure, M.A. Brend, A.G. Barker and J.F. Carrotte, International Journal of Multiphase Flow 131 (2020) 103313, which is hereby incorporated by reference in its entirety. The methodology described in this paper was again, however, developed for the purpose of characterising the thickness of thin films (rather than characterising liquid sprays) imaged in a backscatter orientation (rather than in a side scatter orientation).

Fluorescence is the emission of light by a substance that has previously absorbed electromagnetic radiation (e.g., light). Fluorescence typically occurs as a three-stage process: excitation of molecules (known as fluorophores) within the substance by the absorption of electromagnetic radiation having a first wavelength, thereby generating excited electronic singlet states; a period of time during which some of the energy of the excited electronic singlet states may be dissipated by, for example, intermolecular interactions within the substance; and fluorescent emission of light having a second wavelength longer than the first wavelength as molecules return to their electronic ground states. The difference in energy or wavelength between the exciting electromagnetic radiation and the fluoresced light is known as the Stokes shift.

When a liquid sample is fluorescent (i.e., contains fluorophores), the distribution of liquid droplets in a spray of the sample can in principle be determined by stimulating fluorescence of the fluorophores and imaging the spray using detectors configured to detect wavelengths emitted by the fluorophores. An emitted signal can in principle be distinguished from the background signal of the stimulating light because of the change in wavelength.

However, it is known that when a fluorescent liquid sample is excited with light, the intensity of induced fluorescence depends on the particular fluorophore(s) present, the concentration of the fluorophore(s) in the sample, the exciting light intensity and any other parameters which affect the fluorescence process. When imaging a spray of liquid, it is desirable to illuminate the spray using a sheet of light which intersects the spray, so that properties of the spray can be measured across the full width of the spray (e.g., to determine spatial distribution of spray properties such as a liquid-gas ratio). In practice, however, it is not possible to produce light sheets having constant light intensity (particularly when using pulsed laser sources) - instead, light intensity tends to vary spatially within the sheet. In addition, it is not possible to determine the incident light energy on a given droplet in a spray (particularly for dense sprays) because this varies with the number and size of other droplets (which may also scatter and/or absorb light, thus attenuating the light signal) between the considered droplet and the light source. When only a single type of fluorophore is used to image a spray of liquid using a sheet of light, it is therefore not possible to separate out the contributions of the exciting light intensity and other factors on the emitted light intensity. This leads to significant errors when characterising the two-dimensional distribution of fluorophores within the spray.

However, the present inventors have found that a ratiometric technique based on the use of two different types of fluorophores, as used in the ER(L)IF method for the analysis of thin liquid films, enables such errors to be suppressed. Such a technique is known as emission reabsorption induced fluorescence patternation.

In particular, the present inventors have developed a method for characterising liquid sprays in a side scattering orientation by applying principles related to ER(L)IF. This method will first be described in general terms, then more specifically.

In general, the inventors have found that using the intensities of light emitted by two different types of fluorophore in a liquid spray enables errors associated with spatial variations of the intensity of the light sheet to be suppressed and for information relating to the depth of droplets (i.e., in the thickness direction of the light sheet) to be extracted. Use of a side scatter imaging mode enables a thin section of the spray to be selectively characterised. Surprisingly, the inventors have also found that use of a side scatter mode also simplifies the imaging process and mathematics behind it. The method may therefore be characterised as an emission reabsorption induced fluorescence measurement method carried out in a side scatter orientation.

More specifically, ER(L)IF-based methods rely on the measurement of emitted light intensity from at least two different types ($D_1$ and $D_2$) of fluorophore in a sample, where the emission spectrum of $D_1$ fluorophores overlaps the absorption spectrum of $D_2$ fluorophores. This overlap results in absorption of light emitted from $D_1$ fluorophores by $D_2$ fluorophores and thus an attenuated signal in the $D_1$ emission band. This is illustrated in Figures 4 and 5, which show schematically how photons emitted by $D_1$ fluorophores in the $D_1$ emission band can be reabsorbed by $D_2$ fluorophores in the $D_2$ absorption band. The light emitted from $D_2$ fluorophores is also increased by the reabsorption process, but by an effectively negligible amount. It has been found that by evaluating a quotient of measured intensities in the $D_1$ and $D_2$ emission bands, it is possible to remove the incident energy dependence from the output.

In the ER(L)IF papers described hereinabove, a relationship between the thickness $t$ of a liquid film (containing two different types of fluorophores) and returned fluorescent energy is derived. In these papers, the illumination direction and the view direction are parallel along $x$ (because the liquid is imaged in a backscatter orientation). View factors and imaged surface areas are ignored on the assumption that cameras used to detect emitted light in both emission

wavelength bands share an optical path. For a single dye, the excitation intensity, $i_e$, which varies through the depth x of the liquid film is given by

$$i_e = i_0 e^{-\varepsilon C x}$$

where $i_0$ is the delivered excitation intensity (before fluorescent absorption), $\varepsilon$ is a wavelength dependent absorption coefficient and $C$ is the dye concentration, and fluorescence associated with an infinitesimally small sub-layer of the film dx normal to the film surface is given by

$$i_t = i_e \varepsilon C \Phi \mathrm{dx}$$

where $i_t$ is the fluorescent intensity for a single type of fluorophore and $\Phi$ is the dye quantum efficiency.

The emission associated with these layers of the liquid film is $di_t$:

$$di_t = i_0 e^{-\varepsilon C x} \varepsilon C \Phi \mathrm{dx}$$

which may be integrated from $x=0$ to $x=t$ to give the total fluorescence normal to the film of

$$i_t = i_0 \Phi \left(1 - e^{-\varepsilon C t}\right)$$

For small values of $t$ (i.e., $\varepsilon Ct \leq 0.1$), the fluorescent intensity may therefore be linearly related to the thickness of the film:

$$i_t \approx i_0 \varepsilon C \Phi t$$

This process may be extended to model the fluorescent intensity emitted for a system comprising two different types of fluorophore, labelled 1 and 2, where the emission of fluorophore type 1 is reabsorbed by fluorophore type 2 and fluorophore properties are denoted with a subscript 1 or 2. The absence of a subscript infers a generic "combined" property:

$$i_{t1} = \frac{i_0 \varepsilon_1 C_1 \Phi_1 \eta_1 \left(1 - e^{-(\varepsilon C + \varepsilon_2 C_2)t}\right)}{\varepsilon C + \varepsilon C_2}$$

$$i_{t2} = \frac{i_0 \varepsilon_2 C_2 \Phi_2 \eta_2 \left(1 - e^{-\varepsilon C t}\right)}{\varepsilon C}$$

This allows the ratio to be taken to eliminate the incident energy $i_0$:

$$R_t = \frac{i_{t1}}{i_{t2}} = \frac{\varepsilon C}{\varepsilon C + \varepsilon C_2} \frac{\varepsilon_1 C_1 \Phi_1 \eta_1 \left(1 - e^{-(\varepsilon C + \varepsilon_2 C_2)t}\right)}{\varepsilon_2 C_2 \Phi_2 \eta_2 (1 - e^{-\varepsilon C t})}$$

A number of multiplicative constants may also be compiled into a single fluorescence constant $K_t$:

$$R_t = K_t \frac{1 - e^{-(\varepsilon C + \varepsilon_2 C_2)t}}{1 - e^{-\varepsilon C t}}$$

This relation is approximately linear at small values of $t$.

Thus, the value of $t$ can be determined from measurements of $i_{t1}$ and $i_{t2}$.

The present inventors have adapted this approach for analysis of liquid sprays in a side scatter orientation by adjusting the modelling to account for orthogonality between the attenuation of the incident energy and the resulting fluorescent excitation. The inventors have surprisingly found that this orthogonality actually greatly simplifies the result, as for the orthogonal illumination case, the excitation energy $i_e$ is independent of the view direction x and therefore does not

require modelling in order to recover the fluorescent intensity.

In addition, the droplet imaging case differs from the thin film imaging case by the absence of a measurement continuum. For film thickness measurements, there are two considered regions: that inside the film which attenuates and fluoresces and that outside which does not. For a fluorescent spray, however, multiple fluorescing scatterers exist with attenuation from both the elastic and inelastic fluorescent scatterings. The emitted intensity is therefore not summed through the continuum, but instead discrete scatterers' emissions are summed.

Considering the $j^{th}$ individual droplet in a spray, an expression for the attenuation of the projected light through the field may be formed in terms of the elastically scattered and fluorescent energy. A bold superscript is used in the following equations to denote the droplet under consideration. As the light projection direction considered is orthogonal to that of the recovery of the scattered light, a given droplet may well be exposed to an arbitrary excitation intensity, resulting from multiple scattering, attenuation due to other droplets in the path, etc.

$$i_{v_1}^{\boldsymbol{j}} = i_e^{\boldsymbol{j}} \varepsilon_1 C_1 \Phi_1 V_{liquid}^{\boldsymbol{j}} e^{-\varepsilon_2 C_2 \eta_2 V_{liquid}^{\boldsymbol{j}}}$$

$$i_{v_2}^{\boldsymbol{j}} = i_e^{\boldsymbol{j}} \varepsilon_2 C_2 \Phi_2 V_{liquid}^{\boldsymbol{j}}$$

**where** $i_{v_1}^{\boldsymbol{j}}$ is the fluorescent intensity of fluorophore type *1* in the $j^{th}$ droplet, $i_{v_2}^{\boldsymbol{j}}$ is the fluorescent intensity of fluorophore type 2 in the $j^{th}$ droplet, and $V_{liquid}^{\boldsymbol{j}}$ is the volume of the $j^{th}$ liquid droplet.

Assuming that the spray under consideration is dense and drop sizes are small compared to light sheet thickness, light recovered is likely to have originated from multiple fluorescent droplets through the light sheet. Provided that the depth of the light sheet is small relative to the distance of the imaging system, the recovered intensities may be assumed to be invariant with depth (with the exception of the depth-related variations of $i_e$) and the recovered intensities simply summed across an interrogation volume defined by the back projection of an imaged pixel through an illuminated region of the field.

$$\sum_V R_v = \frac{\sum_{\boldsymbol{j}=1}^{N} i_{v1}^{\boldsymbol{j}}}{\sum_{\boldsymbol{j}=1}^{N} i_{v2}^{\boldsymbol{j}}}$$

$$\sum_V R_v = \frac{\sum_{\boldsymbol{j}=1}^{N} i_e^{\boldsymbol{j}} \varepsilon_1 C_1 \Phi_1 V_{liquid}^{\boldsymbol{j}} e^{-\varepsilon_2 C_2 \eta_2 V_{liquid}^{\boldsymbol{j}}}}{\sum_{\boldsymbol{j}=1}^{N} i_e^{\boldsymbol{j}} \varepsilon_2 C_2 \Phi_2 V_{liquid}^{\boldsymbol{j}}}$$

$$\sum_V R_v = \frac{\varepsilon_1 C_1 \Phi_1}{\varepsilon_2 C_2 \Phi_2} \sum_{\boldsymbol{j}=1}^{N} e^{-\varepsilon_2 C_2 \eta_2 V_{liquid}^{\boldsymbol{j}}}$$

For small volumes ( $\varepsilon_2 C_2 \eta_2 V_{liquid}^{\boldsymbol{j}} \leq 0.1$ ), this expression is linear:

$$\sum_V R_v \approx \frac{\varepsilon_1 C_1 \Phi_1}{\varepsilon_2 C_2 \Phi_2} \left( 1 - \varepsilon_2 C_2 \eta_2 \sum_{\boldsymbol{j}=1}^{N} V_{liquid}^{\boldsymbol{j}} \right)$$

This derivation makes the following assumptions:

- There is no requirement for modelling the mechanism of the incident light attenuation. As the incident energy varies orthogonally to the view direction, there is no correlation between the recorded fluorescent intensity and the incident energy.
- Equal linearity of fluorescence light energy with volume for both selected fluorophores. To achieve this, it is assumed that fluorophore concentrations are relatively low and illumination energy is sufficiently low to prevent quantum

saturation.

- Monochromaticity of light, in the sense that fluorescence is excited by a single wavelength of light which is delivered by the illumination source and that receiving optics are tight band-pass filtered.
- Drop volume is small ( $V_{liquid}^{j} \leq 0.1/(\varepsilon_2 C_2 \eta_2)$ ) such that the ratio is linear with the sum of volume.
- Imaging resolution is sufficiently low that all drops are imagined on a single pixel.
- Returned fluorescent energy is equally attenuated for both types of fluorophore as the light passes from the fluorescent source to the photodetector.

The measured ratio gives a summation of liquid volume through the light sheet depth, with the depth vector not sheet-normal but defined by the intersection of the local back-projected pixel image. For cases where a uniform 2-dimensional light sheet is presented, short focal length imaging systems will result in increased numbers of particles summed at the radial extremities of the image, as compared to locations near to the optical axis due to projective differences. Additionally, the sum of volume along a ray is a somewhat limited property. Mitigations to these difficulties can, however, be made. First, the sum of volume may be converted into a mass through calibration of the constant fluorophore properties and knowledge of the liquid density. This calibration could be achieved using a phase doppler anemometry measurement or by the measurement of a previously quantified reference spray. By calculating the spatial location of the light sheet, the local imaged volume may also be computed, allowing for a measured mass of liquid per unit volume to be calculated, equivalent to a local liquid to gas ratio:

$$\frac{\rho_{liquid}}{V}\left(K_{v1} + K_{v1}\sum_{V} R_v\right) \approx m_{liquid}/V$$

In this expression, the fluorescent constants have been rearranged and replaced by two ensemble calibration constants. This can be combined with a particle image velocimetry (PIV) measurement to obtain a measurement of liquid flux.

It will be appreciated that the method according to the disclosure may be used with any suitable types of fluorophore, dependent on the liquid to be studied, as long as they exhibit the emission/absorption overlap as illustrated in Figure 5 necessary to achieve emission reabsorption. Suitable types of fluorophore are described elsewhere in this application.

*Example analysis of individual droplets*

System 1 was used to analyse sprays of Jet A-1 using the method according to the disclosure. The jet fuel was dyed with pyrromethene 567 (which has a fluorescence absorption peak of 518 nm and an emission peak of 547 nm when measured in ethanol) and pyrromethene 650 (which has a fluorescence absorption peak of 588 nm and an emission peak of 612 nm when measured in ethanol). The spray was illuminated with a sheet of light generated using the 532 nm line of an Nd:YAG laser, falling withing the absorption bands of both pyrromethene 567 and pyrromethene 650.

Figure 6 (a) is a snapshot image of the spray obtained in a side scattering orientation taking into account all scattered wavelengths. Figure 6 (b) is a magnified image of one selected droplet from the spray. At the imaging resolution used, the droplet had an imaged diameter of about 10 pixels.

The acquisition system was used to filter the received light to detect intensities at 568 nm and 620 nm, corresponding to wavelengths within the emission bands of pyrromethene 567 and pyrromethene 650, respectively, in Jet A-1. Figure 7 (a) shows a false colour image of the droplet produced by combining the measured intensities. Figure 7 (b) shows a two-dimensional image of the same droplet in terms of the quotient of the measured intensities. Figure 8 (a) illustrates how the same result can be shown as a three-dimension map of the measured quotient as a function of position within the droplet. Figure 8 (b) illustrates how this can be converted to a map of droplet thickness in the imaging direction.

*Example analysis of spray distribution*

System 1 was used to analyse sprays of Jet A-1 using the method according to the disclosure. The jet fuel was dyed with pyrromethene 567 (which has a fluorescence absorption peak of 518 nm and an emission peak of 547 nm when measured in ethanol) and pyrromethene 650 (which has a fluorescence absorption peak of 588 nm and an emission peak of 612 nm when measured in ethanol). The spray was illuminated with sheet of light generated using the 532 nm line of an Nd:YAG laser, falling withing the absorption bands of both pyrromethene 567 and pyrromethene 650.

The acquisition system was used to filter the received light to detect intensities at 568 nm and 620 nm, corresponding to wavelengths within the emission bands of pyrromethene 567 and pyrromethene 650, respectively,

in Jet A-1. Figure 9 (a) is a snapshot image of the spray obtained in a side scattering orientation taking into account all scattered wavelengths. Figure 9 (b) is a corresponding image based on the quotient of the measured intensities. The imaging was repeated 2500 times and the averaged measurements of the quotient are shown in Figure 9 (c). From this image, it is possible to determine the circumferential flow uniformity for the spray.

*Variations*

It will be understood that the disclosure is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

**1.** A method of analysing a spray of liquid (8) from a nozzle, the method comprising:

receiving a fluorescent liquid composition comprising fluorophores of a first type and fluorophores of a second type, wherein the fluorophores of the first type are excitable by absorption of electromagnetic radiation in a first absorption wavelength band and are configured to emit electromagnetic radiation, following excitation, in a first emission wavelength band, and wherein the fluorophores of the second type are excitable by absorption of electromagnetic radiation in a second absorption wavelength band and are configured to emit electromagnetic radiation, following excitation, in a second emission wavelength band, wherein the first emission wavelength band overlaps with the second absorption wavelength band;
ejecting the fluorescent liquid composition from the nozzle to generate a spray;
projecting, within a sheet plane, a sheet of light (5) through the spray, wherein the light comprises wavelengths within the first absorption wavelength band and within the second absorption wavelength band;
capturing, in a side scattering orientation, light scattered by the spray within the sheet plane and determining a first intensity corresponding to an intensity of the captured light within the first emission wavelength band and a second intensity corresponding to an intensity of the captured light within the second emission wavelength band; and
determining a characteristic of the spray based on the first intensity and the second intensity.

**2.** The method according to Claim 1, wherein the first intensity is determined based on wavelengths of the captured light lying in the first emission band but not in the first absorption band, and wherein the second intensity is determined based on wavelengths of the captured light lying in the second emission band but not in the second absorption band.

**3.** The method according to Claim 1 or Claim 2, wherein the characteristic is a liquid to gas ratio.

**4.** The method according to Claim 3, wherein the liquid to gas ratio is determined based on a quotient of the first intensity and the second intensity.

**5.** The method according to any one of the preceding claims, wherein the light is captured at one or more image sensors (10, 11) having a plurality of pixels.

**6.** The method according to Claim 5, wherein the light scattered by the spray at a particular point in time is captured at the one or more image sensors and wherein, for each pixel of the one or more image sensors, a depth of a droplet of fluorescent liquid composition at a respective pixel is determined based on a quotient of the first intensity and the second intensity.

**7.** The method according to Claim 5 or Claim 6 when appendant to claim 3, wherein the light sheet is pulsed in time as a plurality of pulses, wherein for each pulse, the light scattered by the spray is captured at the one or more image sensors and a corresponding first intensity and a corresponding second intensity are determined, and wherein the liquid to gas ratio of the spray is determined based on the determined first intensities and second intensities for the plurality of pulses, and optionally wherein the light is separated by a dichroic mirror (9), for example having a surface flatness **characterised by** a peak-to-valley deformation of no greater than about 5 waves/inch.

**8.** The method according to any one of the preceding claims, wherein capturing light scattered by the spray in the sheet plane comprises separating light received from the sheet plane to direct light in the first emission wavelength band to a

first image sensing region and light in the second emission wavelength band to a second image sensing region.

**9.** The method according to any one of the preceding claims, the method comprising:

projecting the sheet of light through the spray at a plurality of different locations having different distances from the nozzle;
at each location, capturing, in a side scattering orientation, light scattered by the spray from the sheet plane and determining a respective first intensity corresponding to an intensity of the captured light within the first emission wavelength band and a respective second intensity corresponding to an intensity of the captured light within the second emission wavelength band; and
determining the characteristic of the spray based on the first intensities and the second intensities determined for each of the plurality of different locations;
and, optionally, moving the sheet of light between each of the plurality of different locations.

**10.** The method according to any one of the preceding claims, wherein:

(a) the fluorophores of the first type and the fluorophores of the second type are both excitable by electromagnetic radiation having a wavelength from about 300 nm to about 800 nm, for example, from about 400 nm to about 800 nm, or from about 450 nm to about 650 nm, or from about 500 nm to about 550 nm;
(b) a primary emission peak within the first emission wavelength band and a primary emission peak within the second emission wavelength band are separated by no less than about 10 nm, for example, no less than about 25 nm, or no less than about 50 nm;
(c) a primary emission peak within the first emission wavelength band and a primary absorption peak within the second absorption wavelength band are separated by no more than about 100 nm, for example, no more than about 75 nm, or no more than about 50 nm; and/or
(d) a primary absorption peak within the first absorption wavelength band and a primary absorption peak within the second absorption wavelength band are separated from one another by no less than about 10 nm, for example, no less than about 25 nm, or no less than about 70 nm, and/or by no more than about 150 nm, for example, no more than about 125 nm, or no more than about 100 nm.

**11.** The method according to any one of the preceding claims, wherein (A):

(a) the first absorption wavelength band comprises a primary absorption peak at a wavelength from about 450 nm to about 600 nm, for example, from about 500 nm to about 540 nm, or from about 510 nm to about 530 nm;
(b) the first emission wavelength band comprises a primary emission peak at a wavelength from about 480 nm to about 620 nm, for example, from about 530 nm to about 570 nm, or from about 540 nm to about 560 nm;
(c) the second absorption wavelength band comprises a primary absorption peak at a wavelength from about 520 nm to about 660 nm, for example, from about 570 nm to about 610 nm, or from about 580 nm to about 600 nm; and/or
(d) the second emission wavelength band comprises a primary emission peak at a wavelength from about 540 nm to about 680 nm, for example, from about 590 nm to about 630 nm, or from about 600 nm to about 620 nm;

and/or (B) the fluorophores of the first type and the fluorophores of the second type are both non-protein organic compounds, for example, non-protein aromatic organic compounds.

**12.** The method according to any one of the preceding claims, wherein (A):
the fluorophores of the first type and the fluorophores of the second type are each selected from the group consisting of xanthene derivatives, cyanine derivatives, squaraine derivatives, ring-substituted squaraines, squaraine rotaxane derivatives, naphthalene derivatives, dansyl derivatives, prodan derivatives, coumarin derivatives, oxadiazole derivatives, anthracene derivatives, pyrene derivatives, acridine derivatives, arylmethine derivatives, tetrapyrrole derivatives, and dipyrromethene derivatives;
and/or (B):
the fluorophores of the first type and the fluorophores of the second type are each selected from the group consisting of fluorescein, fluorescein 555, disodium fluorescein, rhodamine, rhodamine 3B perchlorate, rhodamine 560 chloride, rhodamine 560 perchlorate, rhodamine 575, rhodamine 590 chloride, rhodamine 590 tetrafluoroborate, rhodamine 590 perchlorate, rhodamine 610 chloride, rhodamine 610 tetrafluoroborate, rhodamine 610 perchlorate, rhodamine 640 perchlorate, sulforhodamine 640, X-rhodamine, Lissamine rhodamine B, Oregon green, eosin, Texas red, cyanine, indocarbocyanine, oxacarbocyanine, thiacarbocyanine, merocyanine, Seta dyes, Square dyes, Tau dyes,

pyridyloxazole, nitrobenzoxadiazole, benzoxadiazole, anthraquinones, coumarin, hydroxycoumarin, aminocoumarin, methoxycoumarin, Coumarin 440, Coumarin 445, Coumarin 450, Coumarin 456, Coumarin 460, Coumarin 461, Coumarin 478, Coumarin 480, Coumarin 481, Coumarin 485, Coumarin 490, Coumarin 498, Coumarin 500, Coumarin 503, Coumarin 504, Coumarin 510, Coumarin 515, Coumarin 519, Coumarin 521, Coumarin 521T, Coumarin 522B, Coumarin 523, Coumarin 525, Coumarin 535, Coumarin 540, Coumarin 540A, Coumarin 545, DRAQ5, DRAQ7, CyTRAK Orange, cascade blue, Pacific blue, Pacific orange, Lucifer yellow, Nile red, Nile blue, Nile blue 690 perchlorate, cresyl violet, cresyl violet 670 perchlorate, oxazine 170, oxazine 750 perchlorate, proflavin, acridine orange, acridine yellow, auramine, crystal violet, malachite green, porphin, phthalocyanine, bilirubin, pyrromethenes, pyrromethene 546, pyrromethene 556, pyrromethene 567, pyrromethene 580, pyrromethene 597, pyrromethene 605, pyrromethene 650, BODIPY, aza-BODIPY, NBD, R-phycoerythrin, PE-CY5 conjugates, PE-Cy7 conjugates, PerCP-Cy5.5 conjugates, G-DYE100, G-DYE200, G-DYE300, G-DYE400, Cy2, Cy3, Cy3B, Cy3.5, Cy5, Cy5.5, Cy7, TRITC, allophycocyanin, and APC-Cy7 conjugates.

**13.** The method according to any one of the preceding claims, wherein the fluorophores of the first type and the fluorophores of the second type have the following chemical structure:

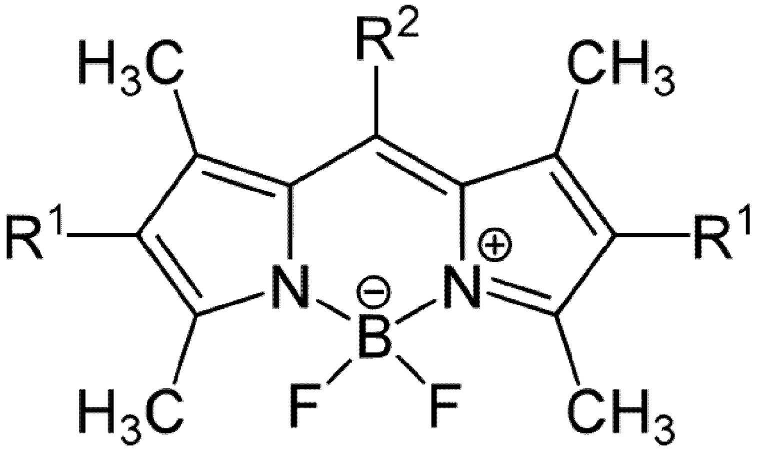

wherein $R^1$ is selected from the group consisting of H, $SO_3Na$, $C_2H_5$, $(CH_2)_3CH_3$, and $C(CH_3)_3$; and wherein $R^2$ is selected from the group consisting of $CH_3$, $CH_2$-O-C(=O)$CH_3$, and CN.

**14.** The method according to any one of the preceding claims, wherein:

(A) the fluorophores of the first type and the fluorophores of the second type are each pyrromethenes, for example, selected from the group consisting of pyrromethene 546, pyrromethene 556, pyrromethene 567, pyrromethene 580, pyrromethene 597, pyrromethene 605, pyrromethene 650; and/or
(B) the flurorophores of the first type are pyrromethene 567 and the fluorophores of the second type of pyrromethene 650.

**15.** A system for analysing a spray of liquid, the system comprising:

an injection system (3) configured to eject a fluorescent liquid composition into a volume (7) along an ejection axis, to thereby generate a spray (8) within the volume;
an illumination system (2) configured to emit a sheet of light (5) into the volume;
an acquisition system (4) configured to capture light from the volume, and to determine intensities of captured light at at least two distinct wavelengths,
wherein the volume is disposed between the injection system and the acquisition system such that the acquisition system is configured to capture a side scatter of light from the sheet of light scattered by the spray of fluorescent liquid composition in the volume; and
a controller (12) configured to carry out a method according to any preceding claim.

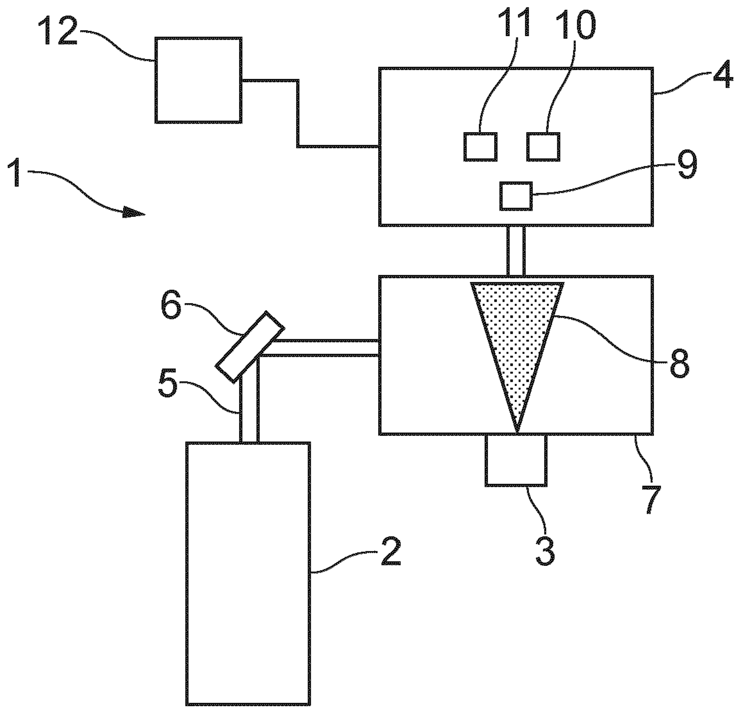


FIG. 1

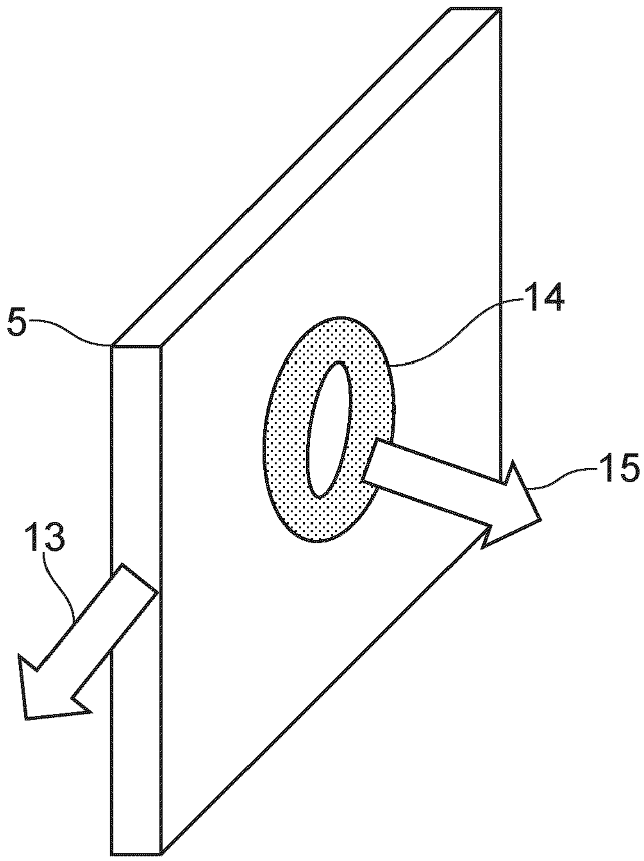


FIG. 2

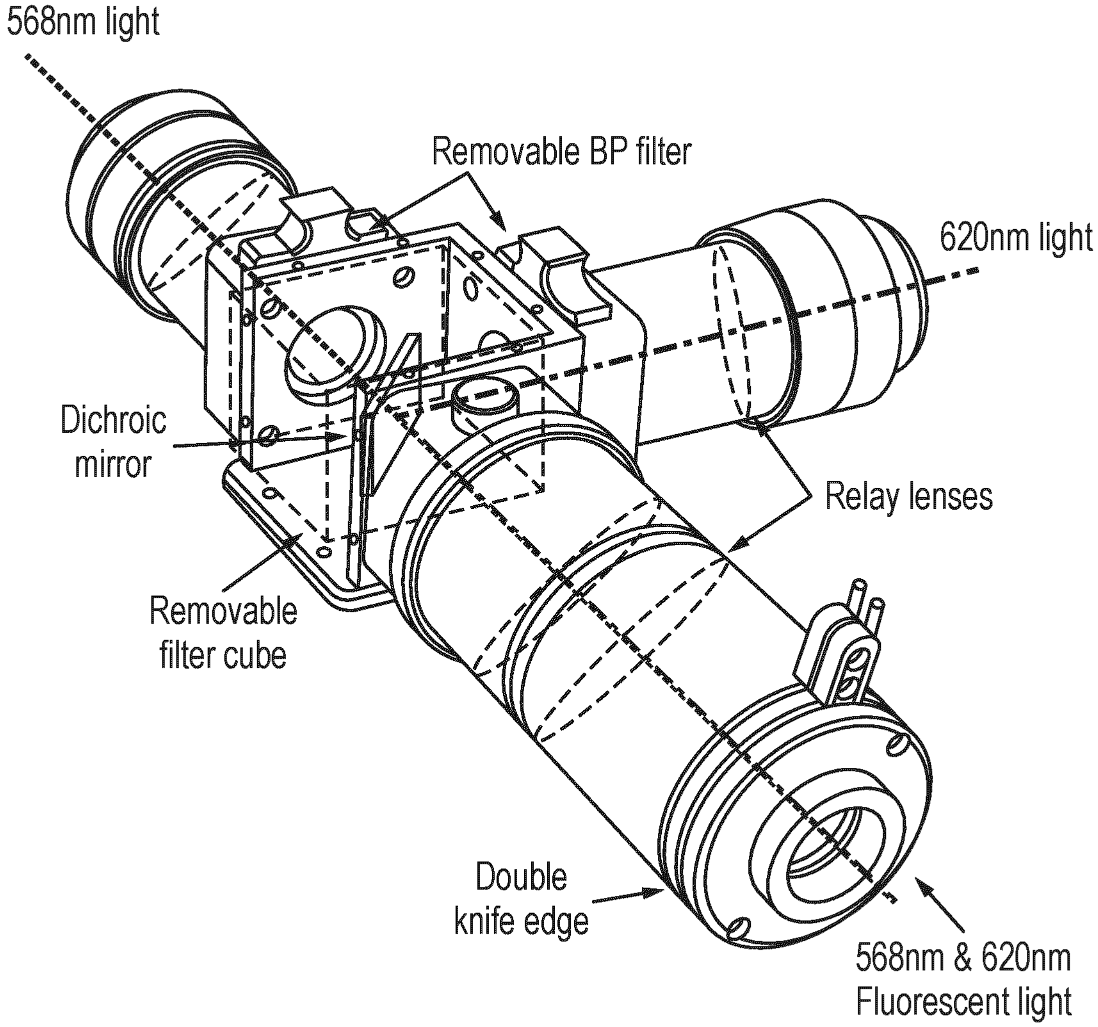
568nm light
Removable BP filter
620nm light
Dichroic mirror
Relay lenses
Removable filter cube
Double knife edge
568nm & 620nm Fluorescent light

FIG. 3

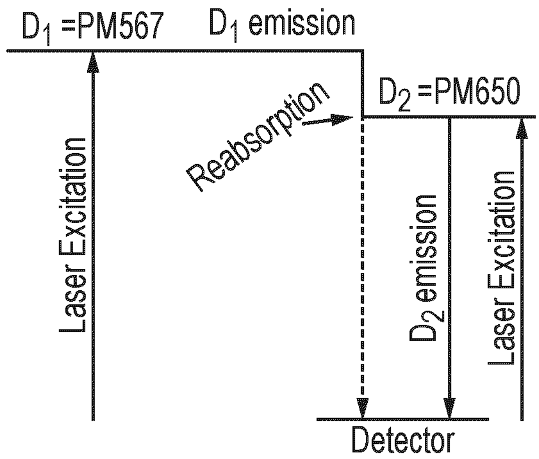
D1 =PM567
D1 emission
D2 =PM650
Reabsorption
Laser Excitation
D2 emission
Laser Excitation
Detector

FIG. 4

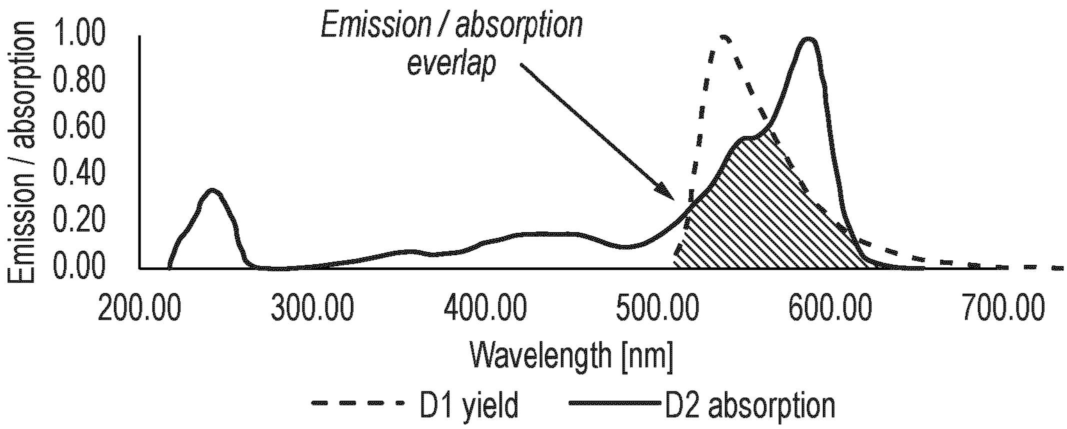
Emission / absorption everlap
Emission / absorption
1.00
0.80
0.60
0.40
0.20
0.00
200.00
300.00
400.00
500.00
600.00
700.00
Wavelength [nm]
D1 yield
D2 absorption

FIG. 5

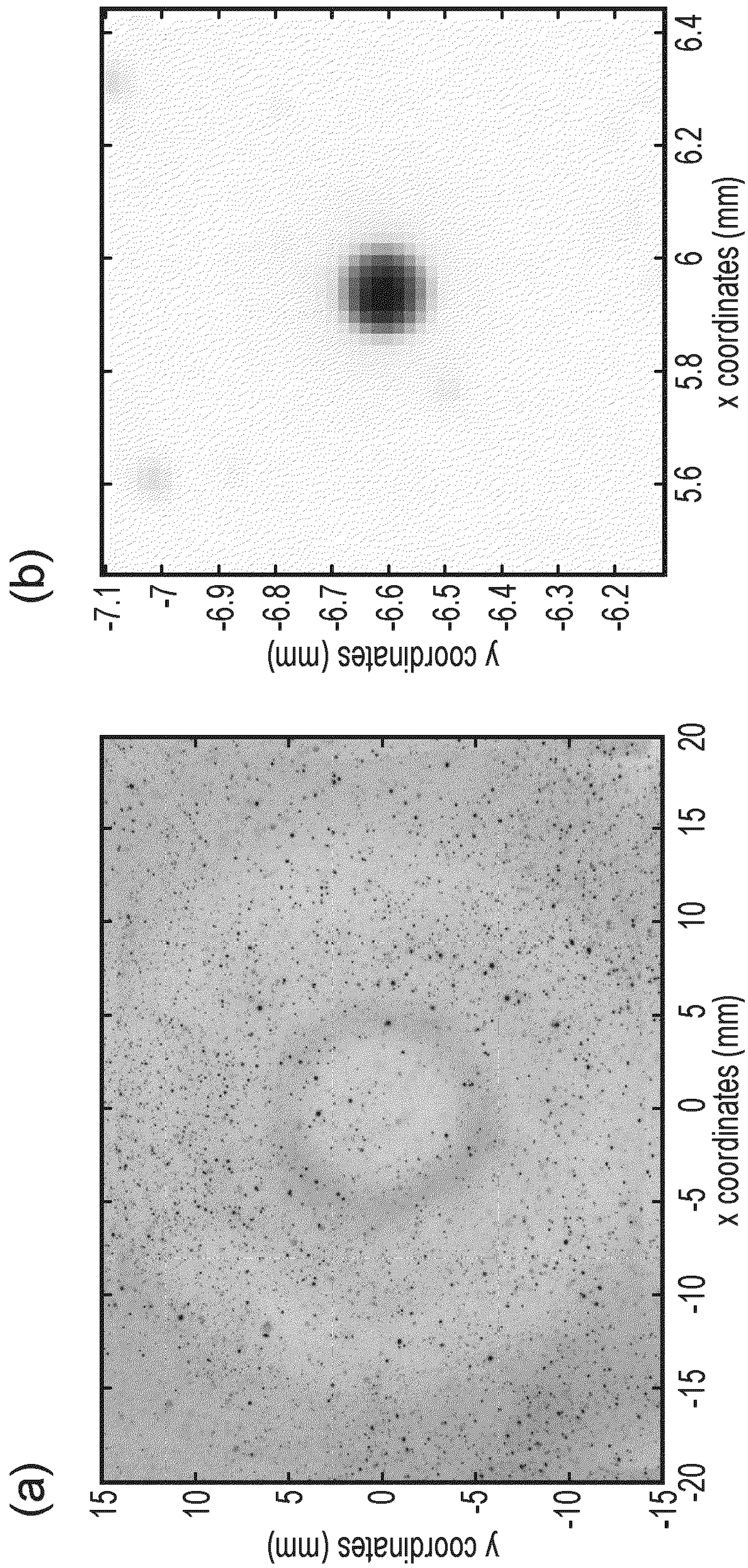
(a)
y coordinates (mm)
x coordinates (mm)
(b)
y coordinates (mm)
x coordinates (mm)

FIG. 6

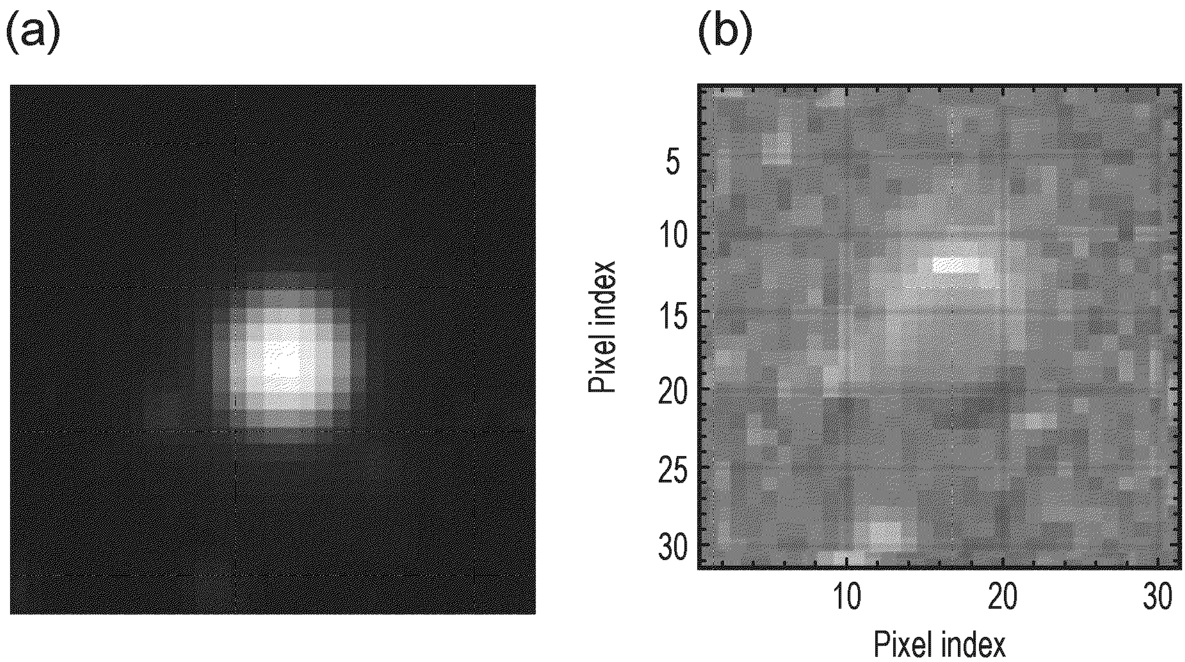


FIG. 7

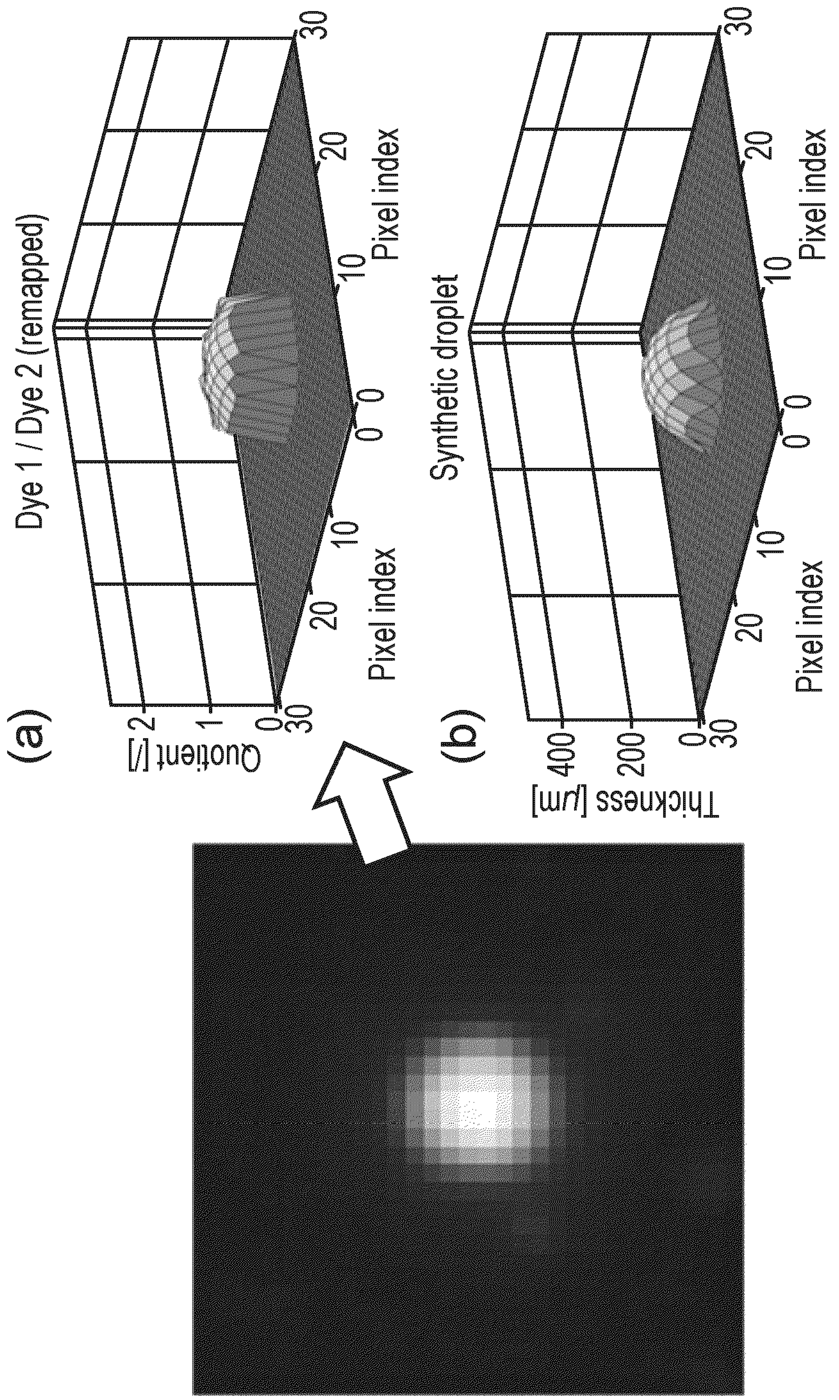
(a)
Dye 1 / Dye 2 (remapped)
Quotient [/]
0
1
2
Pixel index
Pixel index
0
10
20
30
(b)
Synthetic droplet
Thickness [µm]
0
200
400


FIG. 8

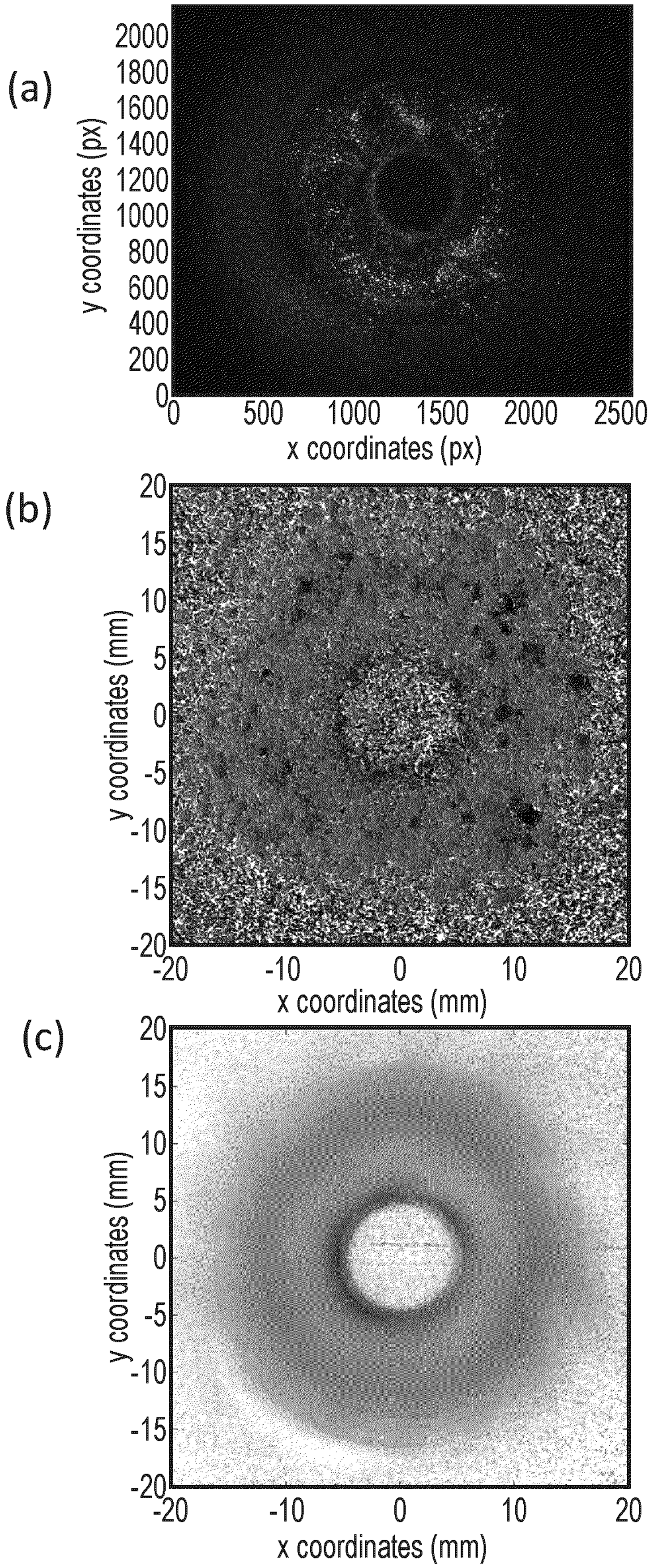
(a)
y coordinates (px)
2000
1800
1600
1400
1200
1000
800
600
400
200
0
0
500
1000
1500
2000
2500
x coordinates (px)
(b)
y coordinates (mm)
20
15
10
5
0
-5
-10
-15
-20
-20
-10
0
10
20
x coordinates (mm)
(c)
y coordinates (mm)
20
15
10
5
0
-5
-10
-15
-20
-20
-10
0
10
20
x coordinates (mm)

FIG. 9

Europäisches Patentamt
European Patent Office
Office européen des brevets

# EUROPEAN SEARCH REPORT

Application Number
EP 25 16 0848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>A | CN 116 879 248 A (CHEMICAL RES INSTITUTE ACADEMY OF MILITARY SCIENCES PLA CHINA ET AL.) 13 October 2023 (2023-10-13)<br>* Examples 1-3;<br>paragraphs [0003], [0009] - [0063];<br>figures 1-3,5,7,9 *<br>----- | 1-3,8,<br>10,15<br><br>4-7,9,<br>11-14 | INV.<br>G01N21/64<br>G01N21/53<br>B05B1/00<br>B05B12/00<br>G01N15/00 |
| A | LABS JENNIFER ET AL: "TWO-DIMENSIONAL DROPLET SIZE AND VOLUME FRACTION DISTRIBUTIONS FROM THE NEAR-INJECTOR REGION OF HIGH-PRESSURE DIESEL SPRAYS",<br>ATOMIZATION AND SPRAYS,<br>vol. 16, no. 7,<br>1 January 2006 (2006-01-01), pages 843-855, XP093211054,<br>DOI: 10.1615/AtomizSpr.v16.i7.90<br>* abstract; figure 1 *<br>* page 843 - page 845 *<br>----- | 1-15 | |
| A | WO 2012/015344 A1 (BERROCAL EDOUARD [SE]; KRISTENSSON ELIAS [SE]; WELLANDER RIKARD [SE]) 2 February 2012 (2012-02-02)<br>* figures 9-12 *<br>----- | 1-15 | TECHNICAL FIELDS SEARCHED (IPC)<br>G01N<br>B05B |
| A | HYEONSEOK KOH ET AL: "Spray characterization in high pressure environment using optical line patternator",<br>MEASUREMENT SCIENCE AND TECHNOLOGY, IOP, BRISTOL, GB,<br>vol. 17, no. 8, 1 August 2006 (2006-08-01), pages 2159-2167, XP020103646,<br>ISSN: 0957-0233, DOI:<br>10.1088/0957-0233/17/8/015<br>* abstract; figures 1,3-5 *<br>-----<br>-/-- | 1-15 | |

The present search report has been drawn up for all claims

| Place of search | Date of completion of the search | Examiner |
|---|---|---|
| Munich | 6 August 2025 | Meacher, David |

1

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

page 1 of 2

Europäisches Patentamt
European Patent Office
Office européen des brevets

# EUROPEAN SEARCH REPORT

Application Number
EP 25 16 0848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CARLOS HIDROVO ET AL: "2D Thickness and Temperature Mapping of Fluids by Means of a Two-Dye Laser Induced Fluorescence Radiometric Scheme", JOURNAL OF FLOW VISUALIZATION & IMAGE PROCESSING, vol. 9, 1 January 2002 (2002-01-01), pages 171-191, XP055117124, * abstract; figures 2,4 * ----- | 1-15 | |
| A | SOMEYA S ET AL: "DeLIF measurement of pH distribution around dissolving CO"2 droplet in high pressure vessel", INTERNATIONAL JOURNAL OF HEAT AND MASS TRANSFER, ELSEVIER, AMSTERDAM, NL, vol. 48, no. 12, 1 June 2005 (2005-06-01), pages 2508-2515, XP004873957, ISSN: 0017-9310, DOI: 10.1016/J.IJHEATMASSTRANSFER.2004.12.042 * abstract; figures 1,8,9 * ----- | 1-15 | |
| A | COPPETA J ET AL: "DUAL EMISSION LASER INDUCED FLUORESCENCE FOR DIRECT PLANAR SCALAR BEHAVIOR MEASUREMENTS", EXPERIMENTS IN FLUIDS, SPRINGER, HEIDELBERG, DE, vol. 25, no. 1, 1 June 1998 (1998-06-01), pages 1-15, XP000848861, ISSN: 0723-4864, DOI: 10.1007/S003480050202 * abstract; figure 1 * ----- | 1-15 | TECHNICAL FIELDS SEARCHED (IPC) |

The present search report has been drawn up for all claims

1

| Place of search | Date of completion of the search | Examiner |
|---|---|---|
| Munich | 6 August 2025 | Meacher, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO.

EP 25 16 0848

This annex lists the patent family members relating to the patent documents cited in the above-mentioned European search report. The members are as contained in the European Patent Office EDP file on
The European Patent Office is in no way liable for these particulars which are merely given for the purpose of information.

06-08-2025

| Patent document cited in search report | Publication date | Patent family member(s) | Publication date |
|---|---|---|---|
| CN 116879248 A | 13-10-2023 | NONE | |
| WO 2012015344 A1 | 02-02-2012 | SE 1000804 A1 | 31-01-2012 |
| | | WO 2012015344 A1 | 02-02-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **CARLOS H. HIDROVO** ; **DOUGLAS P. HART**. Emission reabsorption laser induced fluorescence (ERLIF) film thickness measurement. *Meas. Sci. Technol.*, 2001, vol. 12, 467-477
- **WIENEKE, B.F.A.** PIV Uncertainty Quantification and Beyond. *doctoral thesis*, 12 December 2017, ISBN 978-94-92516-88-6, https://doi.org/10.4233/uuid:4ca8c0b8-0835-47c3-8523-12fc356768f3
- **M.A. BREND** ; **A.G. BARKER** ; **J.F. CARROTTE**. Measurements of fuel thickness for prefilming atomisers at elevated pressure. *International Journal of Multiphase Flow*, 2020, vol. 131, 103313